# EUROPEAN PATENT SPECIFICATION

(11) **EP 3 528 632 B1**
(45) Date of publication and mention of the grant of the patent: **18.06.2025**
(21) Application number: 17861766.8
(22) Date of filing: 28.02.2017
(51) Int. Cl.: A01P 1/00, A01N 33/12

(54) **REDUCED INHALATION HAZARD OF QUATERNARY AMMONIUM COMPOUNDS-pH DRIVEN PHYSIOLOGICAL RESPONSE**
VERRINGERTE EINATMUNGSGEFAHR VON QUARTÄREN AMMONIUMVERBINDUNGEN DURCH PH-GESTEUERTE PHYSIOLOGISCHE REAKTION
RISQUE D'INHALATION RÉDUIT DE COMPOSÉS D'AMMONIUM QUATERNAIRE ASSOCIÉS À UNE RÉPONSE PHYSIOLOGIQUE DÉPENDANT DU PH

(30) Priority: 21.10.2016 US 201662410951 P
(43) Date of publication of application: 28.08.2019
(60) Divisional application: 25172560.2
(73) Proprietor: Ecolab USA Inc., St. Paul, MN 55012 (US)
(72) Inventor: ANDERSON, Derrick, Saint Paul, Minnesota 55102 (US); MAN, Victor Fuk-Pong, Saint Paul, Minnesota 55102 (US)
(74) Representative: Godemeyer Blum Lenze Patentanwälte Partnerschaft mbB - werkpatent
(86) International application number: PCT/US2017/019906
(87) International publication number: WO 2018/075089

(56) References cited:
- WO-A1-03/053144
- CN-A- 102 696 599
- DE-A1- 3 503 848
- US-A- 6 121 219
- US-A1- 2016 295 859
- DOUGLAS L. ARCHER ET AL.: "GRAS notification for the use of benzalkonium chloride & Dossier in support of the generally recognized as safe (GRAS) status of benzalkonium chloride as a component of Free N ClearTM (FNC) as a processing aid for lettuce and carrots", BURDOCK GROUP CONSULTANTS, 6 August 2013 (2013-08-06), XP009514654, Retrieved from the Internet <URL:https://wayback.archive-it.org/7993/20170607005050/https://www.fda.gov/downloads/Food/IngredientsPackagingLabeling/GRAS/NoticeInventory/UCM377740.pdf>
- "Quaternary ammonium biocides as antimicrobial agents protecting historical wood and brick", ACTA BIOCHIMICA POLONICA, vol. 63, no. 1, 3 December 2015 (2015-12-03), pages 153 - 159, XP055500631, Retrieved from the Internet <URL:https://pdfs.semanticscholar.org/9c3e/4dc202982593426b98487e7edde023b6605d.pdf>

## Description

### FIELD OF THE INVENTION

The present invention relates to antimicrobial compositions. In some embodiments, an antimicrobial quaternary ammonium compound is provided in combination with an acid component provide a composition having reduced inhalation risk couple with enhanced antimicrobial properties. In other aspects, an antimicrobial quaternary ammonium compound is provided in combination with a surfactant component and additional functional ingredients. In particular, the combination provides heightened antimicrobial activity and reduced inhalation hazard as compared to either the anionic surfactant or the quaternary ammonium compound alone. Beneficially, according to the invention the antimicrobial composition is provided according to a particular application of use.

### BACKGROUND OF THE INVENTION

Antimicrobial agents are chemical compositions that are used to prevent microbiological contamination and deterioration of products, materials, mediums (such as water process streams) and systems. Antimicrobial agents and compositions are used, for example, as disinfectants or sanitizers in association with hard surface cleaning, food preparation, animal feed, cooling water, hospitality services, hospital and medical uses, pulp and paper manufacturing, cleaning textiles, and water processing. Of the diverse categories of antimicrobial agents and compositions, quaternary ammonium compounds represent one of the largest of the classes of agents in use. At low concentrations, quaternary ammonium type antimicrobial agents are bacteriostatic, fungistatic, algistatic, sporostatic, and tuberculostatic. At medium concentrations they are bactericidal, fungicidal, algicidal, and viricidal against lipophilic viruses. However, at high concentrations, generally greater than about 2 to 3 wt. %, they demonstrate acute toxicity. According to the United States Environmental Protection Agency, contact with quaternary ammonium compounds cause contact dermatitis and nasal irritation. Further, certain quaternary ammonium compounds are respiratory sensitizers and are associated with asthma and other respiratory conditions. Personal protection and proper ventilation are required in handling and use of quaternary ammonium compounds in order to limit the inhalation amount. DE 35 03 848 relates to antimicrobial compositions in particular for cleaning and disinfecting of medical instruments and surfaces. The disclosed composition is based on formaldehyde, further comprising water, quaternary ammonium compounds, surfactants and stabilizers to hold an acidic pH.

Therefore, it is an object of the invention to reduce inhalation hazard of such compositions. Reduced inhalation hazard can also be measured indirectly by reduced aerosol mass collection from high volume air sampling. Reduced levels of mass correlate directly to reduced inhalation. This reduction is distinct from a reduction in misting, which is determined from the droplet size of an applied solution, with an increased droplet size indicating reduced misting and atomization. Indeed, an advantage of the liquid compositions of the present invention is that the inhalation hazard by the user of said compositions is significantly reduced or diminished. Thus, the compositions herein avoid potential health issues like nose and/or throat irritation and/or coughing or even lung damage, which may otherwise occur from inhalation of quaternary ammonium compounds. A further advantage of the present invention is that also eye irritation and/or damage is prevented when using the antimicrobial compositions according to the present invention.

Accordingly, it is an objective of the claimed invention to develop an enhanced antimicrobial quaternary ammonium compound based composition.

It is a further object of the invention to provide an effective antimicrobial quaternary ammonium compound based composition that when in contact with biological matter have a reduced risk of inhalation and exposure.

It is a further object of the invention to provide a synergistic composition of a quaternary ammonium compounds and additional functional ingredients to provide such improvements on acute toxicity levels.

It is an object of the invention to provide an activated composition, having reduced acute toxicity and inhalation risk, having application of use including, for example, hard surface sanitizers, facility sanitizers, water treatment, disinfectant and/or sanitizing surfaces, including high level disinfectants for medical instruments, antimicrobial lubricants, laundry cleaning and sanitizing, antimicrobials having enhanced mildness and reduced irritancy, enhanced combination products, third sink applications, and the like where antimicrobial quaternary ammonium compounds are used.

Other objects, advantages and features of the present invention will become apparent from the following specification taken in conjunction with the accompanying drawings.

### BRIEF SUMMARY OF THE INVENTION

The compositions according to the invention provides the ability to maintain equal or enhanced antimicrobial efficacy of quaternary ammonium compounds while simultaneously reducing inhalation hazard.

The present invention provides an antimicrobial composition comprising a quaternary ammonium compound in combination with an acid component. The composition according to the present invention is a ready to use solution or a solid or liquid concentrate that is soluble in water and has a pH of about 0 to about 6. Examples of quaternary ammonium compounds useful in the present invention include but are not limited to monoalkyltrimethyl ammonium salts, monoalkyldimethylbenzyl ammonium salts, dialkyldimethyl ammonium salts, polysubstituted quaternary ammonium salts, bis-quaternary ammonium salts, polymeric quaternary ammonium salts, and combinations thereof. In some embodiments, the quaternary ammonium compound is present in the amount of about 1 wt.-% to about 50 wt.-%.

The acid component is a fatty acid. In some embodiments, the acid component is present in an amount from about 0.1 wt.-% to about 30 wt.-%.

In a still further embodiment, compositions of invention further include at least one surfactant, wherein said surfactant is an anionic surfactant, nonionic surfactant, amphoteric surfactant, and combinations thereof. In some embodiments of the invention, at least one surfactant is present in an amount from about 0 wt.-% to about 30 wt.-%.

In an embodiment, compositions of the invention further include at least one additional functional ingredient selected from the group consisting additional surfactants, thickeners and/or viscosity modifiers, solvents, solubility modifiers, humectants, metal protecting agents, stabilizing agents, corrosion inhibitors, sequestrants and/or chelating agents, solidifying agent, sheeting agents, pH modifying components (acidulant), fragrances and/or dyes, hydrotropes or couplers, buffers, and combinations thereof.

Methods of employing the compositions are also included in the embodiments of the invention.

### BRIEF DESCRIPTION OF THE DRAWINGS

FIG. 1 shows results of the effect of milk soil solutions and acid solubility evaluations.
FIGS. 2A-2B show results of the effect of solubility of quaternary ammonium compounds and acid solutions in milk soil solutions. Figure 2A depicts results for a BSA protein soil solution and Figure 2B depicts results for a skim milk protein soil.

### DETAILED DESCRIPTION OF THE PREFERRED EMBODIMENT

So that the present invention may be more readily understood, certain terms are first defined. Unless defined otherwise, all technical and scientific terms used herein have the same meaning as commonly understood by one of ordinary skill in the art to which embodiments of the invention pertain.

As used herein, the term "about" refers to variation in the numerical quantity that can occur, for example, through typical measuring and liquid handling procedures used for making concentrates or use solutions in the real world; through inadvertent error in these procedures; through differences in the manufacture, source, or purity of the ingredients used to make the compositions or carry out the methods; and the like. The term "about" also encompasses amounts that differ due to different equilibrium conditions for a composition resulting from a particular initial mixture. Whether or not modified by the term "about", the claims include equivalents to the quantities.

The term "actives" or "percent actives" or "percent by weight actives" or "actives concentration" are used interchangeably herein and refers to the concentration of those ingredients involved in cleaning expressed as a percentage minus inert ingredients such as water or salts.

As used herein, the term "alkyl" or "alkyl groups" refers to saturated hydrocarbons having one or more carbon atoms, including straight-chain alkyl groups (e.g., methyl, ethyl, propyl, butyl, pentyl, hexyl, heptyl, octyl, nonyl, decyl, etc.), cyclic alkyl groups (or "cycloalkyl" or "alicyclic" or "carbocyclic" groups) (e.g., cyclopropyl, cyclopentyl, cyclohexyl, cycloheptyl, cyclooctyl, etc.), branched-chain alkyl groups (e.g., isopropyl, tert-butyl, sec-butyl, isobutyl, etc.), and alkyl-substituted alkyl groups (e.g., alkyl-substituted cycloalkyl groups and cycloalkyl-substituted alkyl groups).

Unless otherwise specified, the term "alkyl" includes both "unsubstituted alkyls" and "substituted alkyls." As used herein, the term "substituted alkyls" refers to alkyl groups having substituents replacing one or more hydrogens on one or more carbons of the hydrocarbon backbone. Such substituents may include, for example, alkenyl, alkynyl, halogeno, hydroxyl, alkylcarbonyloxy, arylcarbonyloxy, alkoxycarbonyloxy, aryloxy, aryloxycarbonyloxy, carboxylate, alkylcarbonyl, arylcarbonyl, alkoxycarbonyl, aminocarbonyl, alkylaminocarbonyl, dialkylaminocarbonyl, alkylthiocarbonyl, alkoxyl, phosphate, phosphonato, phosphinato, cyano, amino (including alkyl amino, dialkylamino, arylamino, diarylamino, and alkylarylamino), acylamino (including alkylcarbonylamino, arylcarbonylamino, carbamoyl and ureido), imino, sulfhydryl, alkylthio, arylthio, thiocarboxylate, sulfates, alkylsulfinyl, sulfonates, sulfamoyl, sulfonamido, nitro, trifluoromethyl, cyano, azido, heterocyclic, alkylaryl, or aromatic (including heteroaromatic) groups.

As used herein, the term "cleaning" refers to a method used to facilitate or aid in soil removal, bleaching, microbial population reduction, and any combination thereof. As used herein, the term "microorganism" refers to any noncellular or unicellular (including colonial) organism. Microorganisms include all prokaryotes. Microorganisms include bacteria (including cyanobacteria), spores, lichens, fungi, protozoa, virinos, viroids, viruses, phages, and some algae. As used herein, the term "microbe" is synonymous with microorganism.

For the purpose of this patent application, successful microbial reduction is achieved when the microbial populations are reduced by at least about 50%, or by significantly more than is achieved by a wash with water. Larger reductions in microbial population provide greater levels of protection.

As used herein, the term "disinfectant" refers to an agent that kills all vegetative cells including most recognized pathogenic microorganisms, using the procedure described in *A.O.A.C. Use Dilution Methods,* Official Methods of Analysis of the Association of Official Analytical Chemists, paragraph 955.14 and applicable sections, 15th Edition, 1990 (EPA Guideline 91-2). As used herein, the term "high level disinfection" or "high level disinfectant" refers to a compound or composition that kills substantially all organisms, except high levels of bacterial spores, and is effected with a chemical germicide cleared for marketing as a sterilant by the Food and Drug Administration. As used herein, the term "intermediate-level disinfection" or "intermediate level disinfectant" refers to a compound or composition that kills mycobacteria, most viruses, and bacteria with a chemical germicide registered as a tuberculocide by the Environmental Protection Agency (EPA). As used herein, the term "low-level disinfection" or "low level disinfectant" refers to a compound or composition that kills some viruses and bacteria with a chemical germicide registered as a hospital disinfectant by the EPA.

As used herein, the phrase "food processing surface" refers to a surface of a tool, a machine, equipment, a structure, a building, or the like that is employed as part of a food processing, preparation, or storage activity. Examples of food processing surfaces include surfaces of food processing or preparation equipment (e.g., slicing, canning, or transport equipment, including flumes), of food processing wares (e.g., utensils, dishware, wash ware, and bar glasses), and of floors, walls, or fixtures of structures in which food processing occurs. Food processing surfaces are found and employed in food anti-spoilage air circulation systems, aseptic packaging sanitizing, food refrigeration and cooler cleaners and sanitizers, ware washing sanitizing, blancher cleaning and sanitizing, food packaging materials, cutting board additives, third-sink sanitizing, beverage chillers and warmers, meat chilling or scalding waters, autodish sanitizers, sanitizing gels, cooling towers, food processing antimicrobial garment sprays, and non-to-low-aqueous food preparation lubricants, oils, and rinse additives.

As used herein, the phrase "food product" includes any food substance that might require treatment with an antimicrobial agent or composition and that is edible with or without further preparation. Food products include meat (e.g. red meat and pork), seafood, poultry, produce (e.g., fruits and vegetables), eggs, living eggs, egg products, ready to eat food, wheat, seeds, roots, tubers, leafs, stems, corns, flowers, sprouts, seasonings, or a combination thereof. The term "produce" refers to food products such as fruits and vegetables and plants or plant-derived materials that are typically sold uncooked and, often, unpackaged, and that can sometimes be eaten raw.

As used herein, the phrase "health care surface" refers to a surface of an instrument, a device, a cart, a cage, furniture, a structure, a building, or the like that is employed as part of a health care activity. Examples of health care surfaces include surfaces of medical or dental instruments, of medical or dental devices, of electronic apparatus employed for monitoring patient health, and of floors, walls, or fixtures of structures in which health care occurs. Health care surfaces are found in hospital, surgical, infirmity, birthing, mortuary, and clinical diagnosis rooms. These surfaces can be those typified as "hard surfaces" (such as walls, floors, bed-pans, etc.), or fabric surfaces, e.g., knit, woven, and non-woven surfaces (such as surgical garments, draperies, bed linens, bandages, etc.,), or patient-care equipment (such as respirators, diagnostic equipment, shunts, body scopes, wheel chairs, beds, etc.,), or surgical and diagnostic equipment. Health care surfaces include articles and surfaces employed in animal health care.

As used herein, the term "instrument" refers to the various medical or dental instruments or devices that can benefit from cleaning with a composition according to the present invention.

As used herein, the phrases "medical instrument," "dental instrument," "medical device," "dental device," "medical equipment," or "dental equipment" refer to instruments, devices, tools, appliances, apparatus, and equipment used in medicine or dentistry. Such instruments, devices, and equipment can be cold sterilized, soaked or washed and then heat sterilized, or otherwise benefit from cleaning in a composition of the present invention. These various instruments, devices and equipment include, but are not limited to: diagnostic instruments, trays, pans, holders, racks, forceps, scissors, shears, saws (e.g. bone saws and their blades), hemostats, knives, chisels, rongeurs, files, nippers, drills, drill bits, rasps, burrs, spreaders, breakers, elevators, clamps, needle holders, carriers, clips, hooks, gouges, curettes, retractors, straightener, punches, extractors, scoops, keratomes, spatulas, expressors, trocars, dilators, cages, glassware, tubing, catheters, cannulas, plugs, stents, scopes (e.g., endoscopes, stethoscopes, and arthroscopes) and related equipment, and the like, or combinations thereof.

As used herein, the term "microbe" is synonymous with microorganism. For the purpose of this patent application, successful microbial reduction is achieved when the microbial populations are reduced by at least about 50%, or by significantly more than is achieved by a wash with water. Larger reductions in microbial population provide greater levels of protection. Differentiation of antimicrobial "-cidal" or "-static" activity, the definitions which describe the degree of efficacy, and the official laboratory protocols for measuring this efficacy are considerations for understanding the relevance of antimicrobial agents and compositions. Antimicrobial compositions can affect two kinds of microbial cell damage. The first is a lethal, irreversible action resulting in complete microbial cell destruction or incapacitation. The second type of cell damage is reversible, such that if the organism is rendered free of the agent, it can again multiply. The former is termed microbiocidal and the later, microbiostatic. A sanitizer and a disinfectant are, by definition, agents which provide antimicrobial or microbiocidal activity. In contrast, a preservative is generally described as an inhibitor or microbiostatic composition.

As used herein, the term "microorganism" refers to any noncellular or unicellular (including colonial) organism. Microorganisms include all prokaryotes. Microorganisms include bacteria (including cyanobacteria), spores, lichens, fungi, protozoa, virinos, viroids, viruses, phages, and some algae.

As used herein, the term "sanitizer" refers to an agent that reduces the number of bacterial contaminants to safe levels as judged by public health requirements. In an embodiment, sanitizers for use in this invention will provide at least a 99.999% reduction (5-log order reduction). These reductions can be evaluated using a procedure set out in Germicidal and Detergent Sanitizing Action of Disinfectants, Official Methods of Analysis of the Association of Official Analytical Chemists, paragraph 960.09 and applicable sections, 15th Edition, 1990 (EPA Guideline 91-2). According to this reference a sanitizer should provide a 99.999% reduction (5-log order reduction) within 30 seconds at room temperature, 25±2°C, against several test organisms. According to embodiments of the invention, a sanitizing rinse provides a 99.999% reduction (5-log order reduction) of the desired organisms (including bacterial contaminants) at a use temperature. Differentiation of antimicrobial "-cidal" or "-static" activity, the definitions which describe the degree of efficacy, and the official laboratory protocols for measuring this efficacy are considerations for understanding the relevance of antimicrobial agents and compositions. Antimicrobial compositions can affect two kinds of microbial cell damage. The first is a lethal, irreversible action resulting in complete microbial cell destruction or incapacitation. The second type of cell damage is reversible, such that if the organism is rendered free of the agent, it can again multiply. The former is termed microbiocidal and the later, microbistatic. A sanitizer and a disinfectant are, by definition, agents which provide antimicrobial or microbiocidal activity. In contrast, a preservative is generally described as an inhibitor or microbistatic composition

As used herein, the term "substantially free" refers to compositions completely lacking the component or having such a small amount of the component that the component does not affect the performance of the composition. The component may be present as an impurity or as a contaminant and shall be less than 0.5 wt.-%. In another embodiment, the amount of the component is less than 0.1 wt.-% and in yet another embodiment, the amount of component is less than 0.01 wt.-%.

The term "surfactant" as used herein is a compound that contains a lipophilic segment and a hydrophilic segment, which when added to water or solvents, reduces the surface tension of the system.

As used herein, the term "ware" refers to items such as eating and cooking utensils, dishes, and other hard surfaces such as showers, sinks, toilets, bathtubs, countertops, windows, mirrors, transportation vehicles, and floors. As used herein, the term "warewashing" refers to washing, cleaning, or rinsing ware. Ware also refers to items made of plastic. Types of plastics that can be cleaned with the compositions according to the invention include but are not limited to, those that include polycarbonate polymers (PC), acrilonitrile-butadiene-styrene polymers (ABS), and polysulfone polymers (PS). Another exemplary plastic that can be cleaned using the compounds and compositions of the invention include polyethylene terephthalate (PET).

As used herein, the term "waters" includes food process or transport waters. Food process or transport waters include produce transport waters (e.g., as found in flumes, pipe transports, cutters, slicers, blanchers, retort systems, washers, and the like), belt sprays for food transport lines, boot and hand-wash dip-pans, third-sink rinse waters, and the like. Waters also include domestic and recreational waters such as pools, spas, recreational flumes and water slides, fountains, and the like.

As used herein, "weight percent," "wt.-%," "percent by weight," "% by weight," and variations thereof refer to the concentration of a substance as the weight of that substance divided by the total weight of the composition and multiplied by 100. It is understood that, as used here, "percent," "%," and the like are intended to be synonymous with "weight percent," "wt.-%," etc.

As used herein, the term "water soluble" refers to a composition or a component if it is at least 90 percent soluble in water, at least 95 percent soluble in water, at least 98 percent soluble in water, at least 99 percent soluble in water, or at least 99.9 percent soluble in water.

The methods and compositions of the present invention may comprise, consist essentially of, or consist of the components and ingredients of the present invention as well as other ingredients described herein. As used herein, "consisting essentially of" means that the methods and compositions may include additional steps, components or ingredients, but only if the additional steps, components or ingredients do not materially alter the basic and novel characteristics of the claimed methods and compositions.

### Antimicrobial Compositions

According to the invention, the antimicrobial compositions comprise at least one quaternary ammonium compound and at least one acid compound provide improved antimicrobial activity with a reduced acute toxicity as a result of reduced inhalation hazard of the composition. Without wishing to be limited to a particular theory of the invention, the antimicrobial compositions of the present invention, when utilized at acidic pH, influence the interactions between quaternary ammonium compounds and protein. In particular, the utilization of quaternary ammonium compounds at an acidic pH reduces electrostatic interactions between positively charged quaternary ammonium compounds with negatively or partially negatively charged biological matter reduces the risk of toxicity and the inhalation hazards associated with quaternary ammonium compounds.

In an aspect, the antimicrobial compositions according to the invention comprise, consist of and/or consist essentially of a quaternary ammonium compound and an acid component. In another aspect, the antimicrobial compositions according to the composition comprise, consist of and/or consist essentially of a quaternary ammonium compound, an acid component, a surfactant, and additional functional ingredients. In another aspect, the antimicrobial compositions according to the invention comprise, consist of and/or consist essentially of a quaternary ammonium compound having each R group with a C20 or less chain length and an anionic surfactant having a C10 or less chain length for linear or branched carboxylates. In an aspect the carboxylates may be alkoxylated or unalkoxylated. In another aspect, the antimicrobial compositions according to the invention comprise, consist of and/or consist essentially of a quaternary ammonium compound having each R group with a C20 or less chain length, and an anionic surfactant having a C13 or less chain length for alkoxylated anionic linear or branched carboxylates.

The antimicrobial compositions according to the invention overcome the concerns of acute toxicity of quaternary ammonium compounds while providing efficacious antimicrobial and/or sanitizing capabilities. The compositions of quaternary ammonium compound and acid component reduce acute toxicity. Without seeking to be bound to a particular theory, control of the pH of concentrated compositions containing quaternary ammonium compounds reduces electrostatic interactions between quaternary ammonium compounds and biological matter, specifically during inhalation. Theoretical surface charge of casein proteins as a function of pH are summarized in Table 1, to illustrate pH - electrostatic charge relationship of proteins. i.e., biological matter. As shown in Table 1 and as one of ordinary skill in the art would appreciate, as the pH nears the isoelectric point, a protein while demonstrate a net zero charge.

**TABLE 1**

| pH | Protein Net Charge | Theoretical Compatibility with Cationic Surfactants |
|---|---|---|
| 0-4.59 | Net cationic | Positive (MW, charge, molar ratio dependent) |
| 4.6 | Net zero charge | Neutral (MW, charge, molar ratio dependent) |
| 4.61-12 | Net anionic | Negative interactions (MW, charge, molar ratio dependent) |

At physiological pH of the lungs, about 7.25-7.45, most biological matter has an anionic change. If the biological matter is then less anionic, i.e., close to/at/or below its respective isoelectric point or pKa, it is believed that according to the theoretical compatibility shown in Table 1, quaternary ammonium compounds and biological matter have reduced electrostatic interactions.

In an aspect of the invention where a surfactant is included in the antimicrobial compositions, cationic surfactants are disfavored due to an increase in electrostatic interactions, thus increasing the toxicity of the compositions.
As such, anionic, nonionic, and amphoteric surfactants, and combinations thereof are favored in order to decrease interactions between biological matter and quaternary ammonium compounds. Similarly, acid components are selected in order to control pH as well as aid in the decrease of electrostatic interactions.

### Quaternary Ammonium Compound

The antimicrobial compositions according to the invention include at least one quaternary ammonium compound. Certain quaternary ammonium compounds are known to have antimicrobial activity. Accordingly, various quaternary ammonium compound with antimicrobial activity can be used in the composition of the invention. In an aspect, the quaternary ammonium compound is an antimicrobial "quat." The term "quaternary ammonium compound" or "quat" generally refers to any composition with the formula 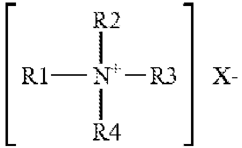 where R1-R4 are alkyl groups that may be alike or different, substituted or unsubstituted, saturated or unsaturated, branched or unbranched, and cyclic or acyclic and may contain ether, ester, or amide linkages; they may be aromatic or substituted aromatic groups. In an aspect, groups R1, R2, R3, and R4 each have less than a C20 chain length. X- is an anionic counterion. The term "anionic counterion" includes any ion that can form a salt with quaternary ammonium. Examples of suitable counterions include halides such as chlorides and bromides, propionates, methosulphates, saccharinates, ethosulphates, hydroxides, acetates, phosphates, carbonates (such as commercially available as Carboquat H, from Lonza), and nitrates. Preferably, the anionic counterion is chloride.

Compositions of the invention provide a quaternary ammonium compound in association with an anionic surfactant. In some embodiments quaternary ammoniums having carbon chains of less than 20 are included in compositions of the invention. Examples of quaternary ammonium compounds useful in the present invention include but are not limited to alkyl dimethyl benzyl ammonium chloride, alkyl dimethyl ethylbenzyl ammonium chloride, octyl decyl dimethyl ammonium chloride, dioctyl dimethyl ammonium chloride, and didecyl dimethyl ammonium chloride to name a few. A single quaternary ammonium or a combination of more than one quaternary ammonium may be included in compositions of the invention. Further examples of quaternary ammonium compounds useful in the present invention include but are not limited to benzethonium chloride, ethyl benzethonium chloride, myristyl trimethyl ammonium chloride, methyl benzethonium chloride, cetalkonium chloride, cetrimonium bromide (CTAB), carnitine, dofanium chloride, tetraethyl ammonium bromide (TEAB), domiphen bromide, benzododecinium bromide, benzoxonium chloride, choline, cocamidopropyl betaine (CAPB), and denatonium.

In some embodiments quaternary ammoniums having carbon chains of less than 20 or C2-C20 are included in compositions of the invention. In other embodiments quaternary ammoniums having carbon chains of C6-C18, C12-C18, C12-C16 and C6-C10 are included in compositions of the invention. Examples of quaternary ammonium compounds useful in the present invention include but are not limited to alkyl dimethyl benzyl ammonium chloride, alkyl dimethyl ethylbenzyl ammonium chloride, octyl decyl dimethyl ammonium chloride, dioctyl dimethyl ammonium chloride, and didecyl dimethyl ammonium chloride to name a few. A single quaternary ammonium or a combination of more than one quaternary ammonium may be included in compositions of the invention. Further examples of quaternary ammonium compounds useful in the present invention include but are not limited to benzethonium chloride, ethylbenzyl alkonium chloride, myristyl trimethyl ammonium chloride, methyl benzethonium chloride, cetalkonium chloride, cetrimonium bromide (CTAB), carnitine, dofanium chloride, tetraethyl ammonium bromide (TEAB), domiphen bromide, benzododecinium bromide, benzoxonium chloride, choline, cocamidopropyl betaine (CAPB), denatonium, and mixtures thereof. In an aspect, combinations of quaternary ammonium compounds are particularly preferred for compositions of the invention, such as for example the commercially-available products Bardac 205 / 208M.

In some embodiments depending on the nature of the R group, the anion, and the number of quaternary nitrogen atoms present, the antimicrobial quaternary ammonium compounds may be classified into one of the following categories: monoalkyltrimethyl ammonium salts; monoalkyldimethylbenzyl ammonium salts; dialkyldimethyl ammonium salts; heteroaromatic ammonium salts; polysubstituted quaternary ammonium salts; bis-quaternary ammonium salts; and polymeric quaternary ammonium salts. Each category will be discussed herein.

Monoalkyltrimethyl ammonium salts contain one R group that is a long-chain alkyl group, and the remaining R groups are short-chain alkyl groups, such as methyl or ethyl groups. Some non-limiting examples of monoalkyltrimethyl ammonium salts include cetyltrimethylammonium bromide, commercial available under the tradenames Rhodaquat M242C/29 and Dehyquart A; alkyltrimethyl ammonium chloride, commercially available as Arquad 16; alkylaryltrimethyl ammonium chloride; and cetyldimethyl ethylammonium bromide, commercially available as Ammonyx DME.

Monoalkyldimethylbenzyl ammonium salts contain one R group that is a long-chain alkyl group, a second R group that is a benzyl radical, and the two remaining R groups are short-chain alkyl groups, such as methyl or ethyl groups. Monoalkyldimethylbenzyl ammonium salts are generally compatible with nonionic surfactants, detergent builders, perfumes, and other ingredients. Some non-limiting examples of monoalkyldimethylbenzyl ammonium salts include alkyldimethylbenzyl ammonium chlorides, commercially available as Barquat from Lonza Inc.; and benzethonium chloride, commercially available as Lonzagard, from Lonza Inc. Additionally, the monoalkyldimethylbenzyl ammonium salts may be substituted. Non-limiting examples of such salts include dodecyldimethyl-3,4-dichlorobenzyl ammonium chloride. Finally, there are mixtures of alkyldimethylbenzyl and alkyldimethyl substituted benzyl (ethylbenzyl) ammonium chlorides commercially available as BTC 2125M from Stepan Company, and Barquat 4250 from Lonza Inc.

Dialkyldimethyl ammonium salts contain two R groups that are long-chain alkyl groups, and the remaining R groups are short-chain alkyl groups, such as methyl groups. Some non-limiting examples of dialkyldimethyl ammonium salts include didecyldimethyl ammonium halides, commercially available as Bardac 22 from Lonza Inc.; didecyl dimethyl ammonium chloride commercially available as Bardac 2250 from Lonza Inc.; dioctyl dimethyl ammonium chloride, commercially available as Bardac LF and Bardac LF-80 from Lonza Inc.); and octyl decyl dimethyl ammonium chloride sold as a mixture with didecyl and dioctyl dimethyl ammonium chlorides, commercially available as Bardac2050 and 2080 from Lonza Inc.

Heteroaromatic ammonium salts contain one R group that is a long-chain alkyl group, and the remaining R groups are provided by some aromatic system. Accordingly, the quaternary nitrogen to which the R groups are attached is part of an aromatic system such as pyridine, quinoline, or isoquinoline. Some non-limiting examples of heteroaromatic ammonium salts include cetylpyridinium halide, commercially available as Sumquat 6060/CPC from Zeeland Chemical Inc.; 1-[3-chloroalkyl]-3,5,7-triaza-1-azoniaadamantane, commercially available as Dowicil 200 from The Dow Chemical Company; and alkyl-isoquinolinium bromide.

Polysubstituted quaternary ammonium salts are a monoalkyltrimethyl ammonium salt, monoalkyldimethylbenzyl ammonium salt, dialkyldimethyl ammonium salt, or heteroaromatic ammonium salt wherein the anion portion of the molecule is a large, high-molecular weight (MW) organic ion. Some non-limiting examples of polysubstituted quaternary ammonium salts include alkyldimethyl benzyl ammonium saccharinate, and dimethylethylbenzyl ammonium cyclohexylsulfamate.

Bis-quatemary ammonium salts contain two symmetric quaternary ammonium moieties having the general formula: 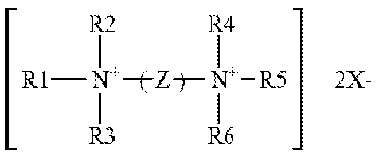 Where the R groups may be long or short chain alkyl, a benzyl radical or provided by an aromatic system. Z is a carbon-hydrogen chain attached to each quaternary nitrogen. Some non-limiting examples of bis-quatemary ammonium salts include 1,10-bis(2-methyl-4-aminoquinolinium chloride)-decane; and 1,6-bis[1-methyl-3-(2,2,6-trimethyl cyclohexyl)-propyldimethylammonium chloride] hexane or triclobisonium chloride.

In an aspect, the quaternary ammonium compound is a medium to long chain alkyl R group, such as from 8 carbons to about 20 carbons, from 8 carbons to about 18 carbons, from about 10 to about 18 carbons, and from about 12 to about 16 carbons, and providing a soluble and good antimicrobial agent.

In an aspect, the quaternary ammonium compound is a short di-alkyl chain quaternary ammonium compound having an R group, such as from 2 carbons to about 12 carbons, from 3 carbons to about 12 carbons, or from 6 carbons to about 12 carbons.

In a preferred aspect, the quaternary ammonium compound is an alkyl benzyl ammonium chloride, a dialkyl benzyl ammonium chloride, a blend of alkyl benzyl ammonium chloride and dialkyl benzyl ammonium chloride, didecyl dimethyl ammonium chloride, dioctyl dimethyl ammonium chloride, a blend of didecyl dimethyl ammonium chloride and dioctyl dimethyl ammonium chloride, or mixtures thereof. In a preferred embodiment the quaternary ammonium compound used in the antimicrobial compositions of the invention is comprised of a mixture of dialkyl quaternary ammonium and alkyl benzyl quaternary ammonium.

According to embodiments of the invention providing antimicrobial compositions, an effective amount of the quaternary ammonium compound is provided in combination with the anionic surfactant to provide synergistic antimicrobial efficacy against a broad spectrum of microbes, including gram negative microbes such as E. coli. Suitable concentrations of the quaternary ammonium compound in such a use solution include at least about 10 ppm, at least about 50 ppm, or at least about 100 ppm, or at least about 150 ppm, or at least about 200 ppm, or at least about 250 ppm, or at least about 300 ppm, or from about 100-500 ppm, or from about 100-300 ppm, or any ranges therein. In some aspects, the activated microbial compositions according to the invention provide efficacy against gram negative conventionally requirement more than 150 ppm quaternary ammonium compounds for any antimicrobial efficacy at concentrations below about 150 ppm, or below about 100 ppm according to the synergy in combination with the anionic surfactants and/or acids. Without being limited according to the invention, all ranges recited are inclusive of the numbers defining the range and include each integer within the defined range.

Additional suitable concentrations of the quaternary ammonium compound in a use solution for the antimicrobial compositions include between about 1 ppm and about 10,000 ppm, 1 ppm and about 1,000 ppm, 5 ppm and about 400 ppm, 10 ppm and about 400 ppm, 20 ppm and about 400 ppm, 25 ppm and about 400 ppm, 50 ppm and about 400 ppm, 75 ppm and about 400 ppm, or 100 ppm and about 400 ppm. Without being limited according to the invention, all ranges recited are inclusive of the numbers defining the range and include each integer within the defined range.
According to embodiments of the invention, the quaternary ammonium compound may be provided in a concentrated composition in the amount between about 0.01 wt.-% - 75 wt.-%, from about 0.1 wt.-% - 50 wt.-%, from about 1 wt.-% - 50 wt.-%, from about 4 wt.-% - 25 wt.-%, from about 4 wt.-% - 20 wt.-%, or from about 4 wt.-% - 15 wt.-%. In addition, without being limited according to the invention, all ranges recited are inclusive of the numbers defining the range and include each integer within the defined range. ***Acid Component***

The antimicrobial compositions according to the invention include at least one acid component. In other aspects, the antimicrobial compositions include at least two acid components. Without seeking to be limited to particular theory of the invention, it is believed that the inclusion of an acid component maintains the pH of the antimicrobial compositions at an acidic pH, thus allowing the quaternary ammonium compound to come into contact with biological matter, such as lung tissue, reducing the hazards of inhalation, namely risk of toxicity. Under mild acidic conditions, biological matter may be at or near their respective isoelectric points. Thus, reducing electrostatic interactions between positively charged quaternary ammonium compounds with negatively or partially negatively charged biological matter reduces the risk of toxicity and the inhalation hazards associated with quaternary ammonium compounds. Further, inclusion of an acid component within a quaternary ammonium compound based antimicrobial composition is unexpected as quaternary ammonium compounds typically retain their function best neutral or alkaline pH. In an aspect of the invention, the acid component is any compound capable of acting as a proton donor. In a further aspect of the invention, the acid component is a mineral acid, organic acid, carboxylic acid, amino acid, acidic chelant, and/or a compound capable of acting as a proton donor.

In a further aspect of the invention, at least two acid components are used in compositions according to the invention. Suitable acid components include carboxylic acids, mineral acids, organic acids, amino acid, acidic chelants, fatty acids, fatty acid surfactants, and/or a compound capable of acting a proton donor, wherein the components may be at least two identical components of any suitable acid component classification, at least two components of any suitable acid component classification, or at least one component of any suitable acid classification and at least one component of any different, yet still suitable acid classification. At least one acid component according to the present invention is a fatty acid.

In an aspect, the compositions include from about 0.1 wt.-% - 30 wt.-% of an acid component, preferably from about 0.1 wt.-% - 25 wt.-% of an acid component, and more preferably from about 1.0 wt.-% - 20 wt.-% of an acid component. In addition, without being limited according to the invention, all ranges recited are inclusive of the numbers defining the range and include each integer within the defined range.

### Carboxylic Acid

In an aspect of the invention, the acid component is a carboxylic acid. Generally, carboxylic acids have the formula R-COOH wherein the R may represent any number of different groups including aliphatic groups, alicyclic groups, aromatic groups, heterocyclic groups, all of which may be saturated or unsaturated as well as substituted or unsubstituted. Carboxylic acids also occur having one, two, three, or more carboxyl groups. Carboxylic acids have a tendency to acidify aqueous compositions in which they are present as the hydrogen atom of the carboxyl group is active and may appear as an anion. The carboxylic acid constituent within the present composition when combined with aqueous hydrogen peroxide generally functions as an antimicrobial agent as a result of the presence of the active hydrogen atom. Moreover, the carboxylic acid constituent within the invention maintains the composition at an acidic pH. Examples of such carboxylic acids include, but are not limited to, acetic acid, citric acid, succinic acid, adipic acid, hydroxyacetic acid, and lactic acid. One of skill in the art will appreciate that other carboxylic acids may be used for purposes of the invention.

### Mineral Acid

In an aspect of the invention, the acid component is a mineral acid, i.e., an inorganic acid. Examples of such mineral acids include, but are not limited to, phosphoric acid, sulfamic acid, sulfuric acid, nitric acid, and hydrocholoric aicd. Generally, all mineral acids form hydrogen ions and the conjugate base ions when dissolved in water. For example, sulfuric acid forms hydrogen sulfate in aqueous solutions via complete ionization to form hydronium ions and hydrogen sulfate. Such conjugate bases are also useful acid components for purposes of the invention.

### Organic Acid

In an aspect of the invention, the acid component is an organic acid. Suitable organic acids include, but are not limited to, methane sulfonic acid, ethane sulfonic acid, propane sulfonic acid, butane sulfonic acid, xylene sulfonic acid, cumene sulfonic acid, benzene sulfonic acid, formic acid, acetic acid, mono, di, or tri-halocarboyxlic acids, picolinic acid, dipicolinic acid, and mixtures thereof.

### Amino Acid

In an aspect of the invention, the acid component is an amino acid and/or an amino acid derivative. Generally, an amino acid contains an amine functional group and a carboxylic acid functional group, usually along with a side chain group to each amino acid. Suitable amino acid and/or amino acid derivatives include, but are not limited to alanine, arginine, asparagine, aspartic acid, cysteine, glutamic acid, glutamine, glycine, histidine, isoleucine, leucine, lysine, methionine, phenylalanine, proline, serine, threonine, tryptophan, tyrosine, valine, selenocysteine, pyrrolysine, and derivatives thereof.

### Acidic Chelant

In an aspect of the invention, the acid component is an acidic chelant. Chelation herein means the binding or complexation of a bi- or multidentate ligand. These ligands, which are often organic compounds, are called chelants, chelators, chelating agents, and/or sequestering agent. Chelating agents form multiple bonds with a single metal ion. Chelants, are chemicals that form soluble, complex molecules with certain metal ions, inactivating the ions so that they cannot normally react with other elements or ions to produce precipitates or scale. The ligand forms a chelate complex with the substrate. The term is reserved for complexes in which the metal ion is bound to two or more atoms of the chelant. The chelants for use in the present invention are those having the capability to act a proton donor.

Suitable chelating agents can be selected from the group consisting of amino carboxylates, amino phosphonates, polyfunctionally-substituted aromatic chelating agents and mixtures thereof. Preferred chelants for use herein are chelants such as the amino acids based chelants and preferably citrate, citrate, tararate, and glutamic-N,N-diacetic acid and derivatives and/or Phosphonate based chelants and preferably Diethylenetriamine penta methylphosphonic acid.

Amino carboxylates include ethylenediaminetetra-acetates, N-hydroxyethylethylenediaminetriacetates, nitrilo-triacetates, ethylenediamine tetrapro-prionates, triethylenetetraaminehexacetates, diethylenetriaminepentaacetates, and ethanoldi-glycines, alkali metal, ammonium, and substituted ammonium salts therein and mixtures therein. As well as MGDA (methyl-glycine-diacetic acid), and salts and derivatives thereof and GLDA (glutamic-N,N-diacetic acid) and salts and derivatives thereof. GLDA (salts and derivatives thereof) is especially preferred according to the invention, with the tetrasodium salt thereof being especially preferred.

Other suitable chelants include amino acid based compound or a succinate based compound. The term "succinate based compound" and "succinic acid based compound" are used interchangeably herein. Other suitable chelants are described in U.S. Pat. No. 6,426,229. Particular suitable chelants include; for example, aspartic acid-N-monoacetic acid (ASMA), aspartic acid-N,N-diacetic acid (ASDA), aspartic acid-N-monopropionic acid (ASMP), iminodisuccinic acid (IDS), Imino diacetic acid (IDA), N-(2-sulfomethyl)aspartic acid (SMAS), N-(2-sulfoethyl)aspartic acid (SEAS), N-(2-sulfomethyl)glutamic acid (SMGL), N-(2-sulfoethyl)glutamic acid (SEGL), N-methyliminodiacetic acid (MIDA), alanine-N,N-diacetic acid (ALDA), serine-N,N-diacetic acid (SEDA), isoserine-N,N-diacetic acid (ISDA), phenylalanine-N,N-diacetic acid (PHDA), anthranilic acid-N,N-diacetic acid (ANDA), sulfanilic acid-N,N-diacetic acid (SLDA), taurine-N,N-diacetic acid (TUDA) and sulfomethyl-N,N-diacetic acid (SMDA) and alkali metal salts or ammonium salts thereof. Also suitable is ethylenediamine disuccinate ("EDDS"), especially the [S,S] isomer as described in U.S. Pat. No. 4,704,233. Furthermore, Hydroxyethyleneiminodiacetic acid, Hydroxyiminodisuccinic acid, Hydroxyethylene diaminetriacetic acid is also suitable. Particularly preferred is alanine. N,N-bis(carboxymethyl)-, trisodium salt.

Other chelants include homopolymers and copolymers of polycarboxylic acids and their partially or completely neutralized salts, monomeric polycarboxylic acids and hydroxycarboxylic acids and their salts. Preferred salts of the abovementioned compounds are the ammonium and/or alkali metal salts, i.e. the lithium, sodium, and potassium salts, and particularly preferred salts are the sodium salts.

Suitable polycarboxylic acids are acyclic, alicyclic, heterocyclic and aromatic carboxylic acids, in which case they contain at least two carboxyl groups which are in each case separated from one another by, preferably, no more than two carbon atoms. Polycarboxylates which comprise two carboxyl groups include, for example, water-soluble salts of, malonic acid, (ethyl enedioxy) diacetic acid, maleic acid, diglycolic acid, tartaric acid, tartronic acid and fumaric acid. Polycarboxylates which contain three carboxyl groups include, for example, water-soluble citrate. Correspondingly, a suitable hydroxycarboxylic acid is, for example, citric acid. Another suitable polycarboxylic acid is the homopolymer of acrylic acid. Preferred are the polycarboxylates end capped with sulfonates.

Amino phosphonates are also suitable for use as chelating agents and include ethylenediaminetetrakis(methylenephosphonates) as DEQUEST. Preferred, these amino phosphonates that do not contain alkyl or alkenyl groups with more than about 6 carbon atoms.

Polyfunctionally-substituted aromatic chelating agents are also useful in the compositions herein such as described in U.S. Pat. No. 3,812,044. Preferred compounds of this type in acid form are dihydroxydisulfobenzenes such as 1,2-dihydroxy-3,5-disulfobenzene.

Further suitable polycarboxylates chelants for use herein include citric acid, lactic acid, acetic acid, succinic acid, formic acid all preferably in the form of a water-soluble salt. Other suitable polycarboxylates are oxodisuccinates, carboxymethyloxysuccinate and mixtures of tartrate monosuccinic and tartrate disuccinic acid such as described in U.S. Pat. No. 4,663,071.

### Fatty Acids and Fatty Acid Surfactants

The present invention requires at least one acid component is a fatty acid and/or fatty acid surfactant. As used herein, the term "fatty acid" includes any of a group of carboxylic acids that include an alkyl chain. In some embodiments, the alkyl groups can be linear or branched, and saturated or unsaturated. The chain of alkyl groups contain any length of carbon atoms. In some embodiments, the chain of alkyl groups contain from 4 to 12 carbon atoms, 5 to 11 carbon atoms, or 8 to 10 carbon atoms. In a preferred embodiment, the chain of alkyl groups contain from 6 to 10 carbon atoms. Exemplary fatty acids can be selected from hexanoic acid, heptanoic acid, octanoic acid, nonanoic acid, isononanoic acid, decanoic acid, lauric acid, palmitic acid, stearic acid, oleic acid, caproic acid, caprylic acid, capric acid and mixtures thereof. Exemplary longer alkyl chain fatty acids can be selected from for example myristic acid, arachidic acid, behenic acid, lignoceric acid, cerotic acid, myristoleic acid, palmitoleic acid, sapienic acid, elaidic acid, vaccenic acid, linoleic acid, linoelaidic acid, a-linolenic acid, arachidonic acid, eicosapentaenoic acid, erucic acid, decosahexaenoic acid, gadoleic acid, erucic acid, margaric acid, behenic acid, ricinoleic acid, lignoceric acid, licanic acid, eleostearic acid and mixtures thereof.In a further aspect, of the invention the acid component is a fatty acid surfactant. Various exemplary surfactants which are fatty acids are disclosed in the following section.

### Surfactants

In some embodiments, the compositions of the present invention optionally include a surfactant. Surfactants suitable for use with the compositions of the present invention include, but are not limited to, nonionic surfactants, anionic surfactants, and amphoteric surfactants. In some embodiments, the compositions of the present invention include about 0 wt.-% to about 50 wt.-% of a surfactant, or from about 0 wt.-% to about 30 wt.-% of a surfactant. In other embodiments the compositions of the present invention include about 0.1 wt-% to about 30 wt-% of a surfactant. In still yet other embodiments, the compositions of the present invention include about 0.5 wt.-% to about 10 wt.-% of a surfactant.

### Nonionic Surfactants

Useful nonionic surfactants are generally characterized by the presence of an organic hydrophobic group and an organic hydrophilic group and are typically produced by the condensation of an organic aliphatic, alkyl aromatic or polyoxyalkylene hydrophobic compound with a hydrophilic alkaline oxide moiety which in common practice is ethylene oxide or a polyhydration product thereof, polyethylene glycol. Practically any hydrophobic compound having a hydroxyl, carboxyl, amino, or amido group with a reactive hydrogen atom can be condensed with ethylene oxide, or its polyhydration adducts, or its mixtures with alkoxylenes such as propylene oxide to form a nonionic surface-active agent. The length of the hydrophilic polyoxyalkylene moiety which is condensed with any particular hydrophobic compound can be readily adjusted to yield a water dispersible or water soluble compound having the desired degree of balance between hydrophilic and hydrophobic properties. Useful nonionic surfactants include:
Block polyoxypropylene-polyoxyethylene polymeric compounds based upon propylene glycol, ethylene glycol, glycerol, trimethylolpropane, and ethylenediamine as the initiator reactive hydrogen compound. Examples of polymeric compounds made from a sequential propoxylation and ethoxylation of initiator are commercially available from BASF Corp. One class of compounds are difunctional (two reactive hydrogens) compounds formed by condensing ethylene oxide with a hydrophobic base formed by the addition of propylene oxide to the two hydroxyl groups of propylene glycol. This hydrophobic portion of the molecule weighs from about 1,000 to about 4,000. Ethylene oxide is then added to sandwich this hydrophobe between hydrophilic groups, controlled by length to constitute from about 10% by weight to about 80% by weight of the final molecule. Another class of compounds are tetra-flinctional block copolymers derived from the sequential addition of propylene oxide and ethylene oxide to ethylenediamine. The molecular weight of the propylene oxide hydrotype ranges from about 500 to about 7,000; and, the hydrophile, ethylene oxide, is added to constitute from about 10% by weight to about 80% by weight of the molecule.

Condensation products of one mole of alkyl phenol wherein the alkyl chain, of straight chain or branched chain configuration, or of single or dual alkyl constituent, contains from about 8 to about 18 carbon atoms with from about 3 to about 50 moles of ethylene oxide. The alkyl group can, for example, be represented by diisobutylene, diamyl, polymerized propylene, iso-octyl, nonyl, and di-nonyl. These surfactants can be polyethylene, polypropylene, and polybutylene oxide condensates of alkyl phenols. Examples of commercial compounds of this chemistry are available on the market under the trade names Igepal^{®} manufactured by Rhone-Poulenc and Triton^{®} manufactured by Union Carbide.

Condensation products of one mole of a saturated or unsaturated, straight or branched chain alcohol having from about 6 to about 24 carbon atoms with from about 3 to about 50 moles of ethylene oxide. The alcohol moiety can consist of mixtures of alcohols in the above delineated carbon range or it can consist of an alcohol having a specific number of carbon atoms within this range. Examples of like commercial surfactant are available under the trade names Lutensol^{™}, Dehydol^{™} manufactured by BASF, Neodol^{™} manufactured by Shell Chemical Co. and Alfonic^{™} manufactured by Vista Chemical Co.

Condensation products of one mole of saturated or unsaturated, straight or branched chain carboxylic acid having from about 8 to about 18 carbon atoms with from about 6 to about 50 moles of ethylene oxide. The acid moiety can consist of mixtures of acids in the above defined carbon atoms range or it can consist of an acid having a specific number of carbon atoms within the range. Examples of commercial compounds of this chemistry are available on the market under the trade names Disponil or Agnique manufactured by BASF and Lipopeg^{™} manufactured by Lipo Chemicals, Inc.

In addition to ethoxylated carboxylic acids, commonly called polyethylene glycol esters, other alkanoic acid esters formed by reaction with glycerides, glycerin, and polyhydric (saccharide or sorbitan/sorbitol) alcohols have application in this invention for specialized embodiments, particularly indirect food additive applications. All of these ester moieties have one or more reactive hydrogen sites on their molecule which can undergo further acylation or ethylene oxide (alkoxide) addition to control the hydrophilicity of these substances. Care must be exercised when adding these fatty ester or acylated carbohydrates to compositions of the present invention containing amylase and/or lipase enzymes because of potential incompatibility.

Examples of nonionic low foaming surfactants include:
Compounds from (1) which are modified, essentially reversed, by adding ethylene oxide to ethylene glycol to provide a hydrophile of designated molecular weight; and, then adding propylene oxide to obtain hydrophobic blocks on the outside (ends) of the molecule. The hydrophobic portion of the molecule weighs from about 1,000 to about 3,100 with the central hydrophile including 10% by weight to about 80% by weight of the final molecule. These reverse Pluronics^{™} are manufactured by BASF Corporation under the trade name Pluronic^{™} R surfactants. Likewise, the Tetronic^{™} R surfactants are produced by BASF Corporation by the sequential addition of ethylene oxide and propylene oxide to ethylenediamine. The hydrophobic portion of the molecule weighs from about 2,100 to about 6,700 with the central hydrophile including 10% by weight to 80% by weight of the final molecule.

Compounds from groups (1), (2), (3) and (4) which are modified by "capping" or "end blocking" the terminal hydroxy group or groups (of multi-functional moieties) to reduce foaming by reaction with a small hydrophobic molecule such as propylene oxide, butylene oxide, benzyl chloride; and, short chain fatty acids, alcohols or alkyl halides containing from 1 to about 5 carbon atoms; and mixtures thereof. Also included are reactants such as thionyl chloride which convert terminal hydroxy groups to a chloride group. Such modifications to the terminal hydroxy group may lead to all-block, block-heteric, heteric-block or all-heteric nonionics.

Additional examples of effective low foaming nonionics include:
The alkylphenoxypolyethoxyalkanols of U.S. Pat. No. 2,903,486 issued Sep. 8, 1959 to Brown et al. and represented by the formula 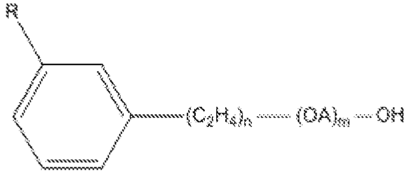 in which R is an alkyl group of 8 to 9 carbon atoms, A is an alkylene chain of 3 to 4 carbon atoms, n is an integer of 7 to 16, and m is an integer of 1 to 10.

The polyalkylene glycol condensates of U.S. Pat. No. 3,048,548 issued Aug. 7, 1962 to Martin et al. having alternating hydrophilic oxyethylene chains and hydrophobic oxypropylene chains where the weight of the terminal hydrophobic chains, the weight of the middle hydrophobic unit and the weight of the linking hydrophilic units each represent about one-third of the condensate.

The defoaming nonionic surfactants disclosed in U.S. Pat. No. 3,382,178 issued May 7, 1968 to Lissant et al. having the general formula Z[(OR)ₙOH]_{z} wherein Z is alkoxylatable material, R is a radical derived from an alkylene oxide which can be ethylene and propylene and n is an integer from, for example, 10 to 2,000 or more and z is an integer determined by the number of reactive oxyalkylatable groups.

The conjugated polyoxyalkylene compounds described in U.S. Pat. No. 2,677,700, issued May 4, 1954 to Jackson et al. corresponding to the formula Y(C₃H₆O)ₙ (C₂H₄O)ₘH wherein Y is the residue of organic compound having from about 1 to 6 carbon atoms and one reactive hydrogen atom, n has an average value of at least about 6.4, as determined by hydroxyl number and m has a value such that the oxyethylene portion constitutes about 10% to about 90% by weight of the molecule.

The conjugated polyoxyalkylene compounds described in U.S. Pat. No. 2,674,619, issued Apr. 6, 1954 to Lundsted et al. having the formula Y[(C₃H₆Oₙ (C₂H₄O)ₘH]ₓ wherein Y is the residue of an organic compound having from about 2 to 6 carbon atoms and containing x reactive hydrogen atoms in which x has a value of at least about 2, n has a value such that the molecular weight of the polyoxypropylene hydrophobic base is at least about 900 and m has value such that the oxyethylene content of the molecule is from about 10% to about 90% by weight. Compounds falling within the scope of the definition for Y include, for example, propylene glycol, glycerine, pentaerythritol, trimethylolpropane, ethylenediamine and the like. The oxypropylene chains optionally, but advantageously, contain small amounts of ethylene oxide and the oxyethylene chains also optionally, but advantageously, contain small amounts of propylene oxide.

Additional conjugated polyoxyalkylene surface-active agents which are advantageously used in the compositions of this invention correspond to the formula: P[(C₃H₆O)ₙ(C₂H₄O)ₘH]ₓ wherein P is the residue of an organic compound having from about 8 to 18 carbon atoms and containing x reactive hydrogen atoms in which x has a value of 1 or 2, n has a value such that the molecular weight of the polyoxyethylene portion is at least about 44 and m has a value such that the oxypropylene content of the molecule is from about 10% to about 90% by weight. In either case the oxypropylene chains may contain optionally, but advantageously, small amounts of ethylene oxide and the oxyethylene chains may contain also optionally, but advantageously, small amounts of propylene oxide.

Polyhydroxy fatty acid amide surfactants suitable for use in the present compositions include those having the structural formula R₂CON_{R1}Z in which: R1 is H, C₁-C₄ hydrocarbyl, 2-hydroxy ethyl, 2-hydroxy propyl, ethoxy, propoxy group, or a mixture thereof; R₂ is a C₅-C₃₁ hydrocarbyl, which can be straight-chain; and Z is a polyhydroxyhydrocarbyl having a linear hydrocarbyl chain with at least 3 hydroxyls directly connected to the chain, or an alkoxylated derivative (preferably ethoxylated or propoxylated) thereof. Z can be derived from a reducing sugar in a reductive amination reaction; such as a glycityl moiety.

The alkyl ethoxylate condensation products of aliphatic alcohols with from about 0 to about 25 moles of ethylene oxide are suitable for use in the present compositions. The alkyl chain of the aliphatic alcohol can either be straight or branched, primary or secondary, and generally contains from 6 to 22 carbon atoms.

The ethoxylated C₆-C₁₈ fatty alcohols and C₆-C₁₈ mixed ethoxylated and propoxylated fatty alcohols are suitable surfactants for use in the present compositions, particularly those that are water soluble. Suitable ethoxylated fatty alcohols include the C₆-C₁₈ ethoxylated fatty alcohols with a degree of ethoxylation of from 3 to 50.

Suitable nonionic alkylpolysaccharide surfactants, particularly for use in the present compositions include those disclosed in U.S. Pat. No. 4,565,647, Llenado, issued Jan. 21, 1986. These surfactants include a hydrophobic group containing from about 6 to about 30 carbon atoms and a polysaccharide, e.g., a polyglycoside, hydrophilic group containing from about 1.3 to about 10 saccharide units. Any reducing saccharide containing 5 or 6 carbon atoms can be used, e.g., glucose, galactose and galactosyl moieties can be substituted for the glucosyl moieties. (Optionally the hydrophobic group is attached at the 2-, 3-, 4-, etc. positions thus giving a glucose or galactose as opposed to a glucoside or galactoside.) The intersaccharide bonds can be, e.g., between the one position of the additional saccharide units and the 2-, 3-, 4-, and/or 6-positions on the preceding saccharide units.

Fatty acid amide surfactants suitable for use the present compositions include those having the formula: R₆CON(R₇)₂ in which R₆ is an alkyl group containing from 7 to 21 carbon atoms and each R₇ is independently hydrogen, C₁- C₄ alkyl, C₁- C₄ hydroxyalkyl, or --( C₂H₄O)xH, where x is in the range of from 1 to 3.

A useful class of non-ionic surfactants include the class defined as alkoxylated amines or, most particularly, alcohol alkoxylated/aminated/alkoxylated surfactants. These non-ionic surfactants may be at least in part represented by the general formulae: R²⁰--(PO)sN--(EO) ₜH, R²⁰--(PO)sN--(EO) ₜH(EO)ₜH, and R²⁰--N(EO)ₜH; in which R²⁰ is an alkyl, alkenyl or other aliphatic group, or an alkyl-aryl group of from 8 to 20, preferably 12 to 14 carbon atoms, EO is oxyethylene, PO is oxypropylene, s is 1 to 20, preferably 2-5, t is 1-10, preferably 2-5, and u is 1-10, preferably 2-5. Other variations on the scope of these compounds may be represented by the alternative formula: R²⁰-(PO)v--N[(EO) _{w}H][(EO)_{z}H] in which R²⁰ is as defined above, v is 1 to 20 (e.g., 1, 2, 3, or 4 (preferably 2)), and w and z are independently 1-10, preferably 2-5. These compounds are represented commercially by a line of products sold by Huntsman Chemicals as nonionic surfactants. A preferred chemical of this class includes Surfonic^{™} PEA 25 Amine Alkoxylate. Preferred nonionic surfactants for the compositions of the invention include alcohol alkoxylates, EO/PO block copolymers, alkylphenol alkoxylates, and the like.

The treatise Nonionic Surfactants, edited by Schick, M. J., Vol. 1 of the Surfactant Science Series, Marcel Dekker, Inc., New York, 1983 is an excellent reference on the wide variety of nonionic compounds generally employed in the practice of the present invention. A typical listing of nonionic classes, and species of these surfactants, is given in U.S. Pat. No. 3,929,678 issued to Laughlin and Heuring on Dec. 30, 1975. Further examples are given in "Surface Active Agents and detergents" (Vol. I and II by Schwartz, Perry and Berch).

### Semi-Polar Nonionic Surfactants

The semi-polar type of nonionic surface active agents are another class of nonionic surfactant useful in compositions of the present invention. Generally, semi-polar nonionics are high foamers and foam stabilizers, which can limit their application in CIP systems. However, within compositional embodiments of this invention designed for high foam cleaning methodology, semi-polar nonionics would have immediate utility. The semi-polar nonionic surfactants include the amine oxides, phosphine oxides, sulfoxides and their alkoxylated derivatives.

Amine oxides are tertiary amine oxides corresponding to the general formula: 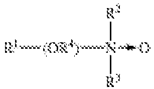 wherein the arrow is a conventional representation of a semi-polar bond; and, R¹, R², and R³ may be aliphatic, aromatic, heterocyclic, alicyclic, or combinations thereof. Generally, for amine oxides of detergent interest, R¹ is an alkyl radical of from about 8 to about 24 carbon atoms; R² and R³ are alkyl or hydroxyalkyl of 1-3 carbon atoms or a mixture thereof; R² and R³ can be attached to each other, e.g. through an oxygen or nitrogen atom, to form a ring structure; R⁴ is an alkaline or a hydroxyalkylene group containing 2 to 3 carbon atoms; and n ranges from 0 to about 20.

Useful water soluble amine oxide surfactants are selected from the coconut or tallow alkyl di-(lower alkyl) amine oxides, specific examples of which are dodecyldimethylamine oxide, tridecyldimethylamine oxide, etradecyldimethylamine oxide, pentadecyldimethylamine oxide, hexadecyldimethylamine oxide, heptadecyldimethylamine oxide, octadecyldimethylaine oxide, dodecyldipropylamine oxide, tetradecyldipropylamine oxide, hexadecyldipropylamine oxide, tetradecyldibutylamine oxide, octadecyldibutylamine oxide, bis(2-hydroxyethyl)dodecylamine oxide, bis(2-hydroxyethyl)-3-dodecoxy-1-hydroxypropylamine oxide, dimethyl-(2-hydroxydodecyl)amine oxide, 3,6,9-trioctadecyldimethylamine oxide and 3-dodecoxy-2-hydroxypropyldi-(2-hydroxyethyl)amine oxide.

Useful semi-polar nonionic surfactants also include the water soluble phosphine oxides having the following structure: 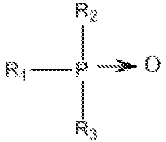 wherein the arrow is a conventional representation of a semi-polar bond; and, R¹ is an alkyl, alkenyl or hydroxyalkyl moiety ranging from 10 to about 24 carbon atoms in chain length; and, R² and R³ are each alkyl moieties separately selected from alkyl or hydroxyalkyl groups containing 1 to 3 carbon atoms.

Examples of useful phosphine oxides include dimethyldecylphosphine oxide, dimethyltetradecylphosphine oxide, methylethyltetradecylphosphone oxide, dimethylhexadecylphosphine oxide, diethyl-2-hydroxyoctyldecylphosphine oxide, bis(2-hydroxyethyl)dodecylphosphine oxide, and bis(hydroxymethyl)tetradecylphosphine oxide.

Semi-polar nonionic surfactants useful herein also include the water soluble sulfoxide compounds which have the structure: 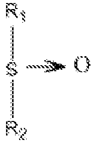 wherein the arrow is a conventional representation of a semi-polar bond; and, R¹ is an alkyl or hydroxyalkyl moiety of about 8 to about 28 carbon atoms, from 0 to about 5 ether linkages and from 0 to about 2 hydroxyl substituents; and R² is an alkyl moiety consisting of alkyl and hydroxyalkyl groups having 1 to 3 carbon atoms.

Useful examples of these sulfoxides include dodecyl methyl sulfoxide; 3-hydroxy tridecyl methyl sulfoxide; 3-methoxy tridecyl methyl sulfoxide; and 3-hydroxy-4-dodecoxybutyl methyl sulfoxide.

Semi-polar nonionic surfactants for the compositions of the invention include dimethyl amine oxides, such as lauryl dimethyl amine oxide, myristyl dimethyl amine oxide, cetyl dimethyl amine oxide, combinations thereof, and the like. Useful water soluble amine oxide surfactants are selected from the octyl, decyl, dodecyl, isododecyl, coconut, or tallow alkyl di-(lower alkyl) amine oxides, specific examples of which are octyldimethylamine oxide, nonyldimethylamine oxide, decyldimethylamine oxide, undecyldimethylamine oxide, dodecyldimethylamine oxide, iso-dodecyldimethyl amine oxide, tridecyldimethylamine oxide, tetradecyldimethylamine oxide, pentadecyldimethylamine oxide, hexadecyldimethylamine oxide, heptadecyldimethylamine oxide, octadecyldimethylaine oxide, dodecyldipropylamine oxide, tetradecyldipropylamine oxide, hexadecyldipropylamine oxide, tetradecyldibutylamine oxide, octadecyldibutylamine oxide, bis(2-hydroxyethyl)dodecylamine oxide, bis(2-hydroxyethyl)-3-dodecoxy-1-hydroxypropylamine oxide, dimethyl-(2-hydroxydodecyl)amine oxide, 3,6,9-trioctadecyldimethylamine oxide and 3-dodecoxy-2-hydroxypropyldi-(2-hydroxyethyl)amine oxide.

Suitable nonionic surfactants suitable for use with the compositions of the present invention include alkoxylated surfactants. Suitable alkoxylated surfactants include EO/PO copolymers, capped EO/PO copolymers, alcohol alkoxylates, capped alcohol alkoxylates, mixtures thereof, or the like. Suitable alkoxylated surfactants for use as solvents include EO/PO block copolymers, such as the Pluronic and reverse Pluronic surfactants; alcohol alkoxylates, such as Dehypon LS-54 (R-(EO)₅(PO)₄) and Dehypon LS-36 (R-(EO)₃(PO)₆); and capped alcohol alkoxylates, such as Plurafac LF221 and Tegoten EC11; mixtures thereof, or the like.

### Anionic surfactants

Also useful in the present invention are surface active substances which are categorized as anionics because the charge on the hydrophobe is negative; or surfactants in which the hydrophobic section of the molecule carries no charge unless the pH is elevated to neutrality or above (e.g. carboxylic acids). Carboxylate, sulfonate, sulfate and phosphate are the polar (hydrophilic) solubilizing groups found in anionic surfactants. Of the cations (counter ions) associated with these polar groups, sodium, lithium and potassium impart water solubility; ammonium and substituted ammonium ions provide both water and oil solubility; and, calcium, barium, and magnesium promote oil solubility. As those skilled in the art understand, anionics are excellent detersive surfactants and are therefore favored additions to heavy duty detergent compositions.

Anionic sulfate surfactants suitable for use in the present compositions include alkyl ether sulfates, alkyl sulfates, the linear and branched primary and secondary alkyl sulfates, alkyl ethoxysulfates, fatty oleyl glycerol sulfates, alkyl phenol ethylene oxide ether sulfates, the C₅ -C₁₇ acyl-N-(C₁ -C₄ alkyl) and -N-(C₁ -C₂ hydroxyalkyl) glucamine sulfates, and sulfates of alkylpolysaccharides such as the sulfates of alkylpolyglucoside, and the like. Also included are the alkyl sulfates, alkyl poly(ethyleneoxy) ether sulfates and aromatic poly(ethyleneoxy) sulfates such as the sulfates or condensation products of ethylene oxide and nonyl phenol (usually having 1 to 6 oxyethylene groups per molecule).

Anionic sulfonate surfactants suitable for use in the present compositions also include alkyl sulfonates, the linear and branched primary and secondary alkyl sulfonates, and the aromatic sulfonates with or without substituents.

Anionic carboxylate surfactants suitable for use in the present compositions include carboxylic acids (and salts), such as alkanoic acids (and alkanoates), ester carboxylic acids (e.g. alkyl succinates), ether carboxylic acids, sulfonated fatty acids, such as sulfonated oleic acid, and the like. Such carboxylates include alkyl ethoxy carboxylates, alkyl aryl ethoxy carboxylates, alkyl polyethoxy polycarboxylate surfactants and soaps (e.g. alkyl carboxyls). Secondary carboxylates useful in the present compositions include those which contain a carboxyl unit connected to a secondary carbon. The secondary carbon can be in a ring structure, e.g. as in p-octyl benzoic acid, or as in alkyl-substituted cyclohexyl carboxylates. The secondary carboxylate surfactants typically contain no ether linkages, no ester linkages and no hydroxyl groups. Further, they typically lack nitrogen atoms in the head-group (amphiphilic portion). Suitable secondary soap surfactants typically contain 11-13 total carbon atoms, although more carbons atoms (e.g., up to 16) can be present. Suitable carboxylates also include acylamino acids (and salts), such as acylgluamates, acyl peptides, sarcosinates (e.g. N-acyl sarcosinates), taurates (e.g. N-acyl taurates and fatty acid amides of methyl tauride), and the like.

Suitable anionic surfactants include alkyl or alkylaryl ethoxy carboxylates of the following formula:

R - O - (CH₂CH₂O)ₙ(CH₂)ₘ - CO₂X (3)

in which R is a C₈ to C₂₂ alkyl group or 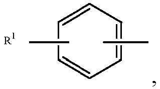 in which R¹ is a C₄-C₁₆ alkyl group; n is an integer of 1-20; m is an integer of 1-3; and X is a counter ion, such as hydrogen, sodium, potassium, lithium, ammonium, or an amine salt such as monoethanolamine, diethanolamine or triethanolamine. In some embodiments, n is an integer of 4 to 10 and m is 1. In some embodiments, R is a C₈-C₁₆ alkyl group. In some embodiments, R is a C₁₂-C₁₄ alkyl group, n is 4, and m is 1.

In other embodiments, R is 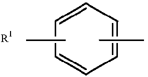 and R¹ is a C₆-C₁₂ alkyl group. In still yet other embodiments, R¹ is a C₉ alkyl group, n is 10 and m is 1.

Such alkyl and alkylaryl ethoxy carboxylates are commercially available. These ethoxy carboxylates are typically available as the acid forms, which can be readily converted to the anionic or salt form. Commercially available carboxylates include, Neodox 23-4, a C₁₂₋₁₃ alkyl polyethoxy (4) carboxylic acid (Shell Chemical), and Emcol CNP-110, a C₉ alkylaryl polyethoxy (10) carboxylic acid (Witco Chemical). Carboxylates are also available from Clariant, e.g. the product Sandopan^{®} DTC, a C₁₃ alkyl polyethoxy (7) carboxylic acid.

### Amphoteric Surfactants

Amphoteric, or ampholytic, surfactants contain both a basic and an acidic hydrophilic group and an organic hydrophobic group. These ionic entities may be any of anionic or cationic groups described herein for other types of surfactants. A basic nitrogen and an acidic carboxylate group are the typical functional groups employed as the basic and acidic hydrophilic groups. **In** a few surfactants, sulfonate, sulfate, phosphonate or phosphate provide the negative charge.

Amphoteric surfactants can be broadly described as derivatives of aliphatic secondary and tertiary amines, in which the aliphatic radical may be straight chain or branched and wherein one of the aliphatic substituents contains from about 8 to 18 carbon atoms and one contains an anionic water solubilizing group, e.g., carboxy, sulfo, sulfato, phosphato, or phosphono. Amphoteric surfactants are subdivided into two major classes known to those of skill in the art and described in "Surfactant Encyclopedia" Cosmetics & Toiletries, Vol. 104 (2) 69-71 (1989), which is herein incorporated by reference in its entirety. The first class includes acyl/dialkyl ethylenediamine derivatives (e.g. 2-alkyl hydroxyethyl imidazoline derivatives) and their salts. The second class includes N-alkylamino acids and their salts. Some amphoteric surfactants can be envisioned as fitting into both classes.

Amphoteric surfactants can be synthesized by methods known to those of skill in the art. For example, 2-alkyl hydroxyethyl imidazoline is synthesized by condensation and ring closure of a long chain carboxylic acid (or a derivative) with dialkyl ethylenediamine. Commercial amphoteric surfactants are derivatized by subsequent hydrolysis and ring-opening of the imidazoline ring by alkylation -- for example with chloroacetic acid or ethyl acetate. During alkylation, one or two carboxyalkyl groups react to form a tertiary amine and an ether linkage with differing alkylating agents yielding different tertiary amines.

Long chain imidazole derivatives having application in the present invention generally have the general formula: 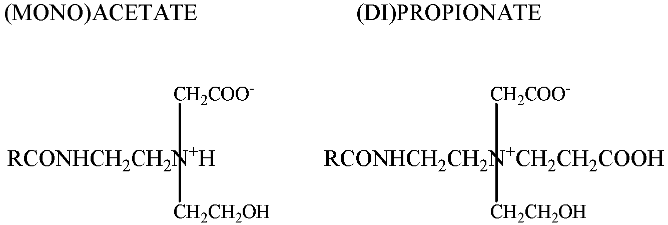 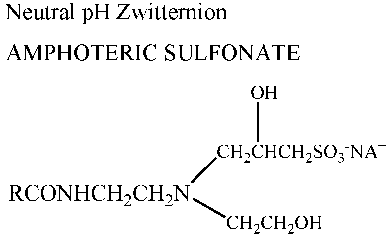 wherein R is an acyclic hydrophobic group containing from about 8 to 18 carbon atoms and M is a cation to neutralize the charge of the anion, generally sodium. Commercially prominent imidazoline-derived amphoterics that can be employed in the present compositions include for example: Cocoamphopropionate, Cocoamphocarboxypropionate, Cocoamphoglycinate, Cocoamphocarboxy-glycinate, Cocoamphopropylsulfonate, and Cocoamphocarboxy-propionic acid. Amphocarboxylic acids can be produced from fatty imidazolines in which the dicarboxylic acid functionality of the amphodicarboxylic acid is diacetic acid and/or dipropionic acid.

The carboxymethylated compounds (glycinates) described herein above frequently are called betaines. Betaines are a special class of amphoteric discussed herein below in the section entitled, Zwitterion Surfactants.

Long chain N-alkylamino acids are readily prepared by reaction RNH₂, in which R=C₈-C₁₈ straight or branched chain alkyl, fatty amines with halogenated carboxylic acids. Alkylation of the primary amino groups of an amino acid leads to secondary and tertiary amines. Alkyl substituents may have additional amino groups that provide more than one reactive nitrogen center. Most commercial N-alkylamine acids are alkyl derivatives of beta-alanine or beta-N(2-carboxyethyl) alanine. Examples of commercial N-alkylamino acid ampholytes having application in this invention include alkyl beta-amino dipropionates, RN(C₂H₄COOM)₂ and RNHC₂H₄COOM. In an embodiment, R can be an acyclic hydrophobic group containing from about 8 to about 18 carbon atoms, and M is a cation to neutralize the charge of the anion.

Suitable amphoteric surfactants include those derived from coconut products such as coconut oil or coconut fatty acid. Additional suitable coconut derived surfactants include as part of their structure an ethylenediamine moiety, an alkanolamide moiety, an amino acid moiety, e.g., glycine, or a combination thereof; and an aliphatic substituent of from about 8 to 18 (e.g., 12) carbon atoms. Such a surfactant can also be considered an alkyl amphodicarboxylic acid. These amphoteric surfactants can include chemical structures represented as: C₁₂-alkyl-C(O)-NH-CH₂-CH₂-N⁺(CH₂-CH₂-CO₂Na)₂-CH₂-CH₂-OH or C₁₂-alkyl-C(O)-N(H)-CH₂-CH₂-N⁺(CH₂-CO₂Na)₂-CH₂-CH₂-OH. Disodium cocoampho dipropionate is one suitable amphoteric surfactant and is commercially available under the tradename Miranol^{™} FBS from Rhodia Inc., Cranbury, N.J. Another suitable coconut derived amphoteric surfactant with the chemical name disodium cocoampho diacetate is sold under the tradename Mirataine^{™} JCHA, also from Rhodia Inc., Cranbury, N.J.

A typical listing of amphoteric classes, and species of these surfactants, is given in U.S. Pat. No. 3,929,678 issued to Laughlin and Heuring on Dec. 30, 1975. Further examples are given in "Surface Active Agents and Detergents" (Vol. I and II by Schwartz, Perry and Berch). Each of these references are herein incorporated by reference in their entirety.

### Zwitterionic Surfactants

Zwitterionic surfactants can be thought of as a subset of the amphoteric surfactants and can include an anionic charge. Zwitterionic surfactants can be broadly described as derivatives of secondary and tertiary amines, derivatives of heterocyclic secondary and tertiary amines, or derivatives of quaternary ammonium, quaternary phosphonium or tertiary sulfonium compounds. Typically, a zwitterionic surfactant includes a positive charged quaternary ammonium or, in some cases, a sulfonium or phosphonium ion; a negative charged carboxyl group; and an alkyl group. Zwitterionics generally contain cationic and anionic groups which ionize to a nearly equal degree in the isoelectric region of the molecule and which can develop strong" inner-salt" attraction between positive-negative charge centers. Examples of such zwitterionic synthetic surfactants include derivatives of aliphatic quaternary ammonium, phosphonium, and sulfonium compounds, in which the aliphatic radicals can be straight chain or branched, and wherein one of the aliphatic substituents contains from 8 to 18 carbon atoms and one contains an anionic water solubilizing group, e.g., carboxy, sulfonate, sulfate, phosphate, or phosphonate.

Betaine and sultaine surfactants are exemplary zwitterionic surfactants for use herein. A general formula for these compounds is: 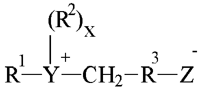 wherein R¹ contains an alkyl, alkenyl, or hydroxyalkyl radical of from 8 to 18 carbon atoms having from 0 to 10 ethylene oxide moieties and from 0 to 1 glyceryl moiety; Y is selected from the group consisting of nitrogen, phosphorus, and sulfur atoms; R² is an alkyl or monohydroxy alkyl group containing 1 to 3 carbon atoms; x is 1 when Y is a sulfur atom and 2 when Y is a nitrogen or phosphorus atom, R³ is an alkylene or hydroxy alkylene or hydroxy alkylene of from 1 to 4 carbon atoms and Z is a radical selected from the group consisting of carboxylate, sulfonate, sulfate, phosphonate, and phosphate groups.

Examples of zwitterionic surfactants having the structures listed above include: 4-[N,N-di(2-hydroxyethyl)-N-octadecylammonio]-butane-1-carboxylate; 5-[S-3-hydroxypropyl-S-hexadecylsulfonio]-3-hydroxypentane-1-sulfate; 3-[P,P-diethyl-P-3,6,9-trioxatetracosanephosphonio]-2-hydroxypropane-1-phosphate; 3-[N,N-dipropyl-N-3-dodecoxy-2-hydroxypropyl-ammonio]-propane-1-phosphonate; 3-(N,N-dimethyl-N-hexadecylammonio)-propane-1-sulfonate; 3-(N,N-dimethyl-N-hexadecylammonio)-2-hydroxy-propane-1-sulfonate; 4-[N,N-di(2(2-hydroxyethyl)-N(2-hydroxydodecyl)ammonio]-butane-1-carboxylate; 3-[S-ethyl-S-(3-dodecoxy-2-hydroxypropyl)sulfonio]-propane-1-phosphate; 3-[P,P-dimethyl-P-dodecylphosphonio]-propane-1-phosphonate; and S[N,N-di(3-hydroxypropyl)-N-hexadecylammonio]-2-hydroxy-pentane-1-sulfate. The alkyl groups contained in said detergent surfactants can be straight or branched and saturated or unsaturated.

The zwitterionic surfactant suitable for use in the present compositions includes a betaine of the general structure: 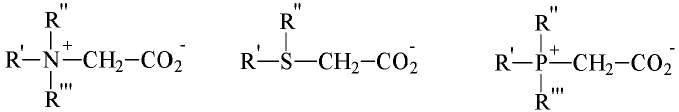 These surfactant betaines typically do not exhibit strong cationic or anionic characters at pH extremes nor do they show reduced water solubility in their isoelectric range. Unlike "external" quaternary ammonium salts, betaines are compatible with anionics. Examples of suitable betaines include coconut acylamidopropyldimethyl betaine; hexadecyl dimethyl betaine; C₁₂₋₁₄ acylamidopropylbetaine; C₈₋₁₄ acylamidohexyldiethyl betaine; 4-C₁₄₋₁₆ acylmethylamidodiethylammonio-1-carboxybutane; C₁₆₋₁₈ acylamidodimethylbetaine; C₁₂₋₁₆ acylamidopentanediethylbetaine; and C₁₂₋₁₆ acylmethylamidodimethylbetaine.

Sultaines useful in the present invention include those compounds having the formula (R(R¹)₂ N⁺ R²SO³⁻, in which R is a C₆ -C₁₈ hydrocarbyl group, each R¹ is typically independently C₁-C₃ alkyl, e.g. methyl, and R² is a C₁-C₆ hydrocarbyl group, e.g. a C₁-C₃ alkylene or hydroxyalkylene group.

A typical listing of zwitterionic classes, and species of these surfactants, is given in U.S. Pat. No. 3,929,678 issued to Laughlin and Heuring on Dec. 30, 1975. Further examples are given in "Surface Active Agents and Detergents" (Vol. I and II by Schwartz, Perry and Berch). Each of these references are herein incorporated in their entirety.

### Additional Functional Ingredients

The components of the detergent composition can further be combined with various functional components suitable for use in ware wash applications. In some embodiments, the detergent composition including the aminocarboxylate, water, alkalinity source, sequestrant and water conditioning polymer make up a large amount, or even substantially all of the total weight of the detergent composition. For example, in some embodiments few or no additional functional ingredients are disposed therein.

In other embodiments, additional functional ingredients may be included in the compositions. The functional ingredients provide desired properties and functionalities to the compositions. For the purpose of this application, the term "functional ingredient" includes a material that when dispersed or dissolved in a use and/or concentrate solution, such as an aqueous solution, provides a beneficial property in a particular use. Some particular examples of functional materials are discussed in more detail below, although the particular materials discussed are given by way of example only, and that a broad variety of other functional ingredients may be used. For example, many of the functional materials discussed below relate to materials used in cleaning, specifically ware wash and hard surface cleaning applications. However, other embodiments may include functional ingredients for use in other applications.

In other embodiments, the compositions may include defoaming agents, anti-redeposition agents, bleaching agents, solubility modifiers, dispersants, rinse aids, metal protecting agents, stabilizing agents, corrosion inhibitors, additional sequestrants and/or chelating agents, fragrances and/or dyes, rheology modifiers or thickeners, hydrotropes or couplers, buffers, solvents and the like.

According to embodiments of the invention, the various additional functional ingredients may be provided in a composition in the amount from about 0 wt.-% - 90 wt.-%, from about 0 wt.-% - 75 wt.-%, from about 0 wt.-% - 50 wt.-%, from about 0.01 wt.-% - 50 wt.-%, from about 0.1 wt.-% - 50 wt.-%, from about 1 wt.-% - 50 wt.-%, from about 1 wt.-% - 30 wt.-%, from about 1 wt.-% - 25 wt.-%, or from about 1 wt.-% - 20 wt.-%. In addition, without being limited according to the invention, all ranges recited are inclusive of the numbers defining the range and include each integer within the defined range.

### Exemplary Embodiments

Exemplary ranges of the antimicrobial compositions according to the invention in concentrated compositions are shown in Tables 2A-2B each in weight percentage.

**TABLE 2A**

| Material | First Exemplary | Second Exemplary | Third Exemplary |
|---|---|---|---|
| | Range wt.-% | Range wt.-% | Range wt.-% |
| Quaternary ammonium compound | 1-50 | 4-20 | 4-15 |
| Acid | 0.1-30 | 1-20 | 1-20 |
| Surfactant | 0-30 | 0-10 | 0.5-10 |
| Additional Functional Ingredients | 0-90 | 0-75 | 0-50 |

**TABLE 2B**

| Material | First Exemplary | Second Exemplary | Third Exemplary |
|---|---|---|---|
| | Range wt.-% | Range wt.-% | Range wt.-% |
| Quaternary ammonium compound | 1-50 | 4-20 | 4-15 |
| Acid | 0.1-30 | 1-20 | 1-20 |
| Surfactant | 0-30 | 0-10 | 0.5-10 |
| Additional Functional Ingredients | Remainder | Remainder | Remainder |

According to the invention, the concentrated antimicrobial compositions set forth in Table 2 have any suitable pH for application of use, including from about 1 to 12. However, according to aspects of the invention, the concentrated solution preferably has an acidic to netural pH depending on a particular application of use thereof, including from about 0 to 6. Without limiting the scope of invention, the numeric ranges are inclusive of the numbers defining the range and include each integer within the defined range.

The antimicrobial compositions may include concentrate compositions or may be diluted to form use compositions. In general, a concentrate refers to a composition that is intended to be diluted with water to provide a use solution that contacts an object to provide the desired cleaning, rinsing, or the like. The antimicrobial composition that contacts the articles to be washed or cleaned can be referred to as a concentrate or a use composition (or use solution) dependent upon the formulation employed in methods according to the invention. It should be understood that the concentration of the quaternary ammonium compound, acid component, surfactant, and other optional functional ingredients in the detergent composition will vary depending on whether the antimicrobial composition is provided as a concentrate or as a use solution.

A use solution may be prepared from the concentrate by diluting the concentrate with water at a dilution ratio that provides a use solution having desired detersive properties. The water that is used to dilute the concentrate to form the use composition can be referred to as water of dilution or a diluent, and can vary from one location to another. The typical dilution factor is between approximately 1 and approximately 10,000 but will depend on factors including water hardness, the amount of soil to be removed and the like. In an embodiment, the concentrate is diluted at a ratio of between about 1:10 and about 1:10,000 concentrate to water. Particularly, the concentrate is diluted at a ratio of between about 1:100 and about 1:5,000 concentrate to water. More particularly, the concentrate is diluted at a ratio of between about 1:250 and about 1:2,000 concentrate to water.

### Additional Exemplary Embodiments

In some aspects, the antimicrobial compositions according to the invention may comprise, consist of and/or consist essentially of a quaternary ammonium compound in an amount from about 1 wt-% to about 50 wt-%, an acid component in an amount from about 0.1 wt-% to about 30 wt-%, a surfactant in an amount from about 0 wt-% to about 30 wt-%, and at least one additional functional ingredient selected from the group consisting of: defoaming agents, anti-redeposition agents, bleaching agents, solubility modifiers, dispersants, rinse aids, metal protecting agents, stabilizing agents, corrosion inhibitors, additional sequestrants and/or chelating agents, fragrances and/or dyes, rheology modifiers or thickeners, hydrotropes or couplers, buffers, solvents and the like in an amount from about 0.01 wt-% to about 50 wt-%.

In some aspects, the antimicrobial compositions according to the invention may comprise, consist of and/or consist essentially of a quaternary ammonium compound in an amount from about 1 wt-% to about 50 wt-%, an acid component in an amount from about 0.1 wt-% to about 30 wt-%, a surfactant in an amount from about 0 wt-% to about 30 wt-%, and at least two additional functional ingredients selected from the group consisting of: defoaming agents, anti-redeposition agents, bleaching agents, solubility modifiers, dispersants, rinse aids, metal protecting agents, stabilizing agents, corrosion inhibitors, additional sequestrants and/or chelating agents, fragrances and/or dyes, rheology modifiers or thickeners, hydrotropes or couplers, buffers, solvents and the like in an amount from about 0.01 wt-% to about 50 wt-%.

In some aspects, the antimicrobial compositions according to the invention may comprise, consist of and/or consist essentially of a quaternary ammonium compound in an amount from about 1 wt-% to about 50 wt-%, an acid component in an amount from about 0.1 wt-% to about 30 wt-%, a surfactant in an amount from about 0 wt-% to about 30 wt-%, and at least three additional functional ingredients selected from the group consisting of: defoaming agents, anti-redeposition agents, bleaching agents, solubility modifiers, dispersants, rinse aids, metal protecting agents, stabilizing agents, corrosion inhibitors, additional sequestrants and/or chelating agents, fragrances and/or dyes, rheology modifiers or thickeners, hydrotropes or couplers, buffers, solvents and the like in an amount from about 0.01 wt-% to about 50 wt-%.

In some aspects, the antimicrobial compositions according to the invention may comprise, consist of and/or consist essentially of a quaternary ammonium compound in an amount from about 1 wt-% to about 50 wt-%, an acid component in an amount from about 0.1 wt-% to about 30 wt-%, a surfactant in an amount from about 0 wt-% to about 30 wt-%, and at least four additional functional ingredients selected from the group consisting of: defoaming agents, anti-redeposition agents, bleaching agents, solubility modifiers, dispersants, rinse aids, metal protecting agents, stabilizing agents, corrosion inhibitors, additional sequestrants and/or chelating agents, fragrances and/or dyes, rheology modifiers or thickeners, hydrotropes or couplers, buffers, solvents and the like in an amount from about 0.01 wt-% to about 50 wt-%.

In some aspects, the antimicrobial compositions according to the invention may comprise, consist of and/or consist essentially of a quaternary ammonium compound in an amount from about 1 wt-% to about 50 wt-%, an acid component in an amount from about 0.1 wt-% to about 30 wt-%, a surfactant in an amount from about 0 wt-% to about 30 wt-%, and at least five additional functional ingredients selected from the group consisting of: defoaming agents, anti-redeposition agents, bleaching agents, solubility modifiers, dispersants, rinse aids, metal protecting agents, stabilizing agents, corrosion inhibitors, additional sequestrants and/or chelating agents, fragrances and/or dyes, rheology modifiers or thickeners, hydrotropes or couplers, buffers, solvents and the like in an amount from about 0.01 wt-% to about 50 wt-%.

### Manufacturing Methods

Compositions of the invention are prepared by addition of materials. The anionic surfactant is added to the quaternary ammonium. The quaternary ammonium compound readily couples the more hydrophobic organic acid into solution with minimal or no agitation.

In an aspect, the addition of materials is provided in a mole to mole ratio of quaternary ammonium and anionic surfactant up to about a 10:1 molar ratio. In an embodiment the ratio of quaternary ammonium to anionic surfactant is about mole to mole.

In some aspects, the compositions according to the invention can be made by combining the components in an aqueous diluent using commonly available containers and blending apparatus. Beneficially, no special manufacturing equipment is required for making the compositions employing the quaternary ammonium compounds and the anionic surfactants. A preferred method for manufacturing the cleaning composition of the invention includes introducing the components into a stirred production vessel.

The antimicrobial compositions according to the invention can be provided in single use or multiple use compositions. In a preferred aspect, the composition is a concentrated liquid or solid composition. Various solids can be employed according to the invention and without limiting the scope of the invention. It should be understood that compositions and methods embodying the invention are suitable for preparing a variety of solid compositions, as for example, a cast, extruded, pressed, molded or formed solid pellet, block, tablet, and the like. In some embodiments, the solid composition can be formed to have a weight of 50 grams or less, while in other embodiments, the solid composition can be formed to have a weight of 50 grams or greater, 500 grams or greater, or 1 kilogram or greater.

### Methods Employing Antimicrobial Compositions of the Invention

The present invention includes methods of using the antimicrobial compositions of the present invention for various applications. The invention includes a method for reducing a microbial population, a method for reducing the population of a microorganism on skin and a method for treating a disease of skin. These methods can operate on an article, surface, in a body or stream of water or a gas, or the like, by contacting the article, surface, body, or stream with a composition of the invention. Contacting can include any of numerous methods for applying a composition of the invention, such as spraying the compositions, immersing the article in compositions, foam or gel treating the article with the compounds or composition, or a combination thereof.

In some embodiments, the compositions of the present invention include killing one or more of the pathogenic bacteria associated with health care surfaces and environments including, but not limited to, *Salmonella typhimurium, Staphylococcus aureus,* methicillin resistant *Staphylococcus aureus, Salmonella choleraesurus, Pseudomonas aeruginosa, Escherichia coli,* mycobacteria, yeast, and mold. The compositions of the invention have activity against a wide variety of microorganisms such as Gram positive (for example, *Listeria monocytogenes* or *Staphylococcus aureus)* and Gram negative (for example, *Escherichia coli* or *Pseudomonas aeruginosa)* bacteria, yeast, molds, bacterial spores, viruses, etc. The compounds and compositions of the present invention, as described above, have activity against a wide variety of human pathogens. The present compounds and compositions can kill a wide variety of microorganisms on a food processing surface, on the surface of a food product, in water used for washing or processing of food product, on a health care surface, or in a health care environment.

The present methods can be used to achieve any suitable reduction of the microbial population in and/or on the target or the treated target composition. In some embodiments, the present methods can be used to reduce the microbial population in and/or on the target or the treated target composition by at least one log10. In other embodiments, the present methods can be used to reduce the microbial population in and/or on the target or the treated target composition by at least two log10. In still other embodiments, the present methods can be used to reduce the microbial population in and/or on the target or the treated target composition by at least three log10. In still other embodiments, the present methods can be used to reduce the microbial population in and/or on the target or the treated target composition by at least five log10. Without limiting the scope of invention, the numeric ranges are inclusive of the numbers defining the range and include each integer within the defined range.

The compositions of the invention can be used for a variety of domestic or industrial applications, e.g., to reduce microbial or viral populations on a surface or object or in a body or stream of water. The compounds can be applied in a variety of areas including kitchens, bathrooms, factories, hospitals, dental offices and food plants, and can be applied to a variety of hard or soft surfaces having smooth, irregular or porous topography. Suitable hard surfaces include, for example, architectural surfaces (e.g., floors, walls, windows, sinks, tables, counters and signs); eating utensils; hard-surface medical or surgical instruments and devices; and hard-surface packaging. Such hard surfaces can be made from a variety of materials including, for example, ceramic, metal, glass, wood or hard plastic. Suitable soft surfaces include, for example paper; filter media; hospital and surgical linens and garments; soft-surface medical or surgical instruments and devices; and soft-surface packaging. Such soft surfaces can be made from a variety of materials including, for example, paper, fiber, woven or nonwoven fabric, soft plastics and elastomers. The compositions of the invention can also be applied to soft surfaces such as food and skin (e.g., a hand). The present compounds can be employed as a foaming or non-foaming environmental sanitizer or disinfectant.

The compositions of the invention can be included in products such as sterilants, sanitizers, disinfectants, preservatives, deodorizers, antiseptics, fungicides, germicides, sporicides, virucides, detergents, bleaches, hard surface cleaners, hand soaps, waterless hand sanitizers, lubricants, rinse aids, 2-in-1 and/or 3-in-1 products, such as insecticide/cleaner/sanitizer, 3-sink applications, and pre- or post-surgical scrubs.

The compositions can also be used in veterinary products such as mammalian skin treatments or in products for sanitizing or disinfecting animal enclosures, pens, watering stations, and veterinary treatment areas such as inspection tables and operation rooms. The present compositions can be employed in an antimicrobial foot bath for livestock or people.

In some aspects, the compositions of the present invention can be employed for reducing the population of pathogenic microorganisms, such as pathogens of humans, animals, and the like. The compounds exhibit activity against pathogens including fungi, molds, bacteria, spores, and viruses, for example, *S. aureus, E. coli, Streptococci, Legionella, Pseudomonas aeruginosa,* mycobacteria, tuberculosis, phages, or the like. Such pathogens can cause a variety of diseases and disorders, including mastitis or other mammalian milking diseases, tuberculosis, and the like. Compositions of the present invention can reduce the population of microorganisms on skin or other external or mucosal surfaces of an animal. In addition, the present compounds can kill pathogenic microorganisms that spread through transfer by water, air, or a surface substrate. The compositions need only be applied to the skin, other external or mucosal surfaces of an animal water, air, or surface.

The antimicrobial compositions can also be used on foods and plant species to reduce surface microbial populations; used at manufacturing or processing sites handling such foods and plant species; or used to treat process waters around such sites. For example, the compounds can be used on food transport lines (e.g., as belt sprays); boot and hand-wash dip-pans; food storage facilities; anti-spoilage air circulation systems; refrigeration and cooler equipment; beverage chillers and warmers, blanchers, cutting boards, third sink areas, and meat chillers or scalding devices. The compositions of the invention can be used to treat produce transport waters such as those found in flumes, pipe transports, cutters, slicers, blanchers, retort systems, washers, and the like. Particular foodstuffs that can be treated with compounds of the invention include eggs, meats, seeds, leaves, fruits and vegetables. Particular plant surfaces include both harvested and growing leaves, roots, seeds, skins or shells, stems, stalks, tubers, corms, fruit, and the like.

In some aspects, the compositions of the present invention are useful in the cleaning or sanitizing of containers, processing facilities, or equipment in the food service or food processing industries. The compositions have particular value for use on food packaging materials and equipment, and especially for cold or hot aseptic packaging. Examples of process facilities in which the compound of the invention can be employed include a milk line dairy, a continuous brewing system, food processing lines such as pumpable food systems and beverage lines, etc. Food service wares can be disinfected with the compound of the invention. For example, the compounds can also be used on or in ware wash machines, low temperature ware wash machines, dishware, bottle washers, bottle chillers, warmers, third sink washers, cutting areas (e.g., water knives, slicers, cutters and saws) and egg washers. Particular treatable surfaces include packaging such as cartons, bottles, films and resins; dish ware such as glasses, plates, utensils, pots and pans; ware wash and low temperature ware wash machines; exposed food preparation area surfaces such as sinks, counters, tables, floors and walls; processing equipment such as tanks, vats, lines, pumps and hoses (e.g., dairy processing equipment for processing milk, cheese, ice cream and other dairy products); and transportation vehicles. Containers include glass bottles, PVC or polyolefin film sacks, cans, polyester, PEN or PET bottles of various volumes (100 ml to 2 liter, etc.), one gallon milk containers, paper board juice or milk containers, etc.

Compositions of the present invention can also be employed by dipping food processing equipment into the use solution, soaking the equipment for a time sufficient to sanitize the equipment, and wiping or draining excess solution off the equipment, The compound may be further employed by spraying or wiping food processing surfaces with the use solution, keeping the surfaces wet for a time sufficient to sanitize the surfaces, and removing excess solution by wiping, draining vertically, vacuuming, etc.

Compositions of the present invention may also be used in a method of sanitizing hard surfaces such as institutional type equipment, utensils, dishes, health care equipment or tools, instruments and other hard surfaces.

The antimicrobial compositions can be applied to microbes or to soiled or cleaned surfaces using a variety of methods. These methods can operate on an object, surface, in a body or stream of water or a gas, or the like, by contacting the object, surface, body, or stream with a compound of the invention. Contacting can include any of numerous methods for applying a compound, such as spraying the compound, immersing the object in the compound, foam or gel treating the object with the compound, or a combination thereof.

A concentrate or use concentration of a compound of the present invention can be applied to or brought into contact with an object by any conventional method or apparatus for applying an antimicrobial or cleaning compound to an object. For example, the object can be wiped with, sprayed with, foamed on, and/or immersed in the compound, or a use solution made from the composition. The composition can be sprayed, foamed, or wiped onto a surface; the composition can be caused to flow over the surface, or the surface can be dipped into the composition. Contacting can be manual or by machine. Food processing surfaces, food products, food processing or transport waters, and the like can be treated with liquid, foam, gel, aerosol, gas, wax, solid, or powdered stabilized compounds according to the invention, or solutions containing these compounds.

The various methods of treatment according to the invention can include the use of any suitable level of the quaternary ammonium compound and anionic surfactant. In some embodiments, the treated target composition comprises from about 1 ppm to about 1000 ppm of the quaternary ammonium compound when diluted for use. In further embodiments, the treated target composition comprises from about 1 ppm and about 500 ppm, 5 ppm and about 400 ppm, 10 ppm and about 100 ppm, 20 ppm and about 100 ppm, 25 ppm and about 100 ppm, 10 ppm and about 75 ppm, 20 ppm and about 75 ppm, 25 ppm and about 75 ppm, or about 50 ppm of the quaternary ammonium compound when diluted for use. In some embodiments, the treated target composition comprises from about 1 ppm to about 1000 ppm of the anionic surfactant in a use solution. In further embodiments, the treated target composition comprises from about 1 ppm and about 500 ppm, 5 ppm and about 250 ppm, 10 ppm and about 100 ppm, 20 ppm and about 100 ppm, 25 ppm and about 100 ppm, 10 ppm and about 50 ppm, 20 ppm and about 50 ppm, 25 ppm and about 50 ppm, or about 50 ppm and about 100 ppm of the anionic surfactant when diluted for use.

In an aspect, the methods of the invention include generating a use solution from the concentrated solid or liquid compositions of the invention. A use solution may be prepared from the concentrate by diluting the concentrate with water at a dilution ratio that provides a use solution having desired sanitizing and/or other antimicrobial properties. The water that is used to dilute the concentrate to form the use composition can be referred to as water of dilution or a diluent, and can vary from one location to another. The typical dilution factor is between approximately 1 and approximately 10,000. In an embodiment, the concentrate is diluted at a ratio of between about 1:10 and about 1:10,000 concentrate to water. Particularly, the concentrate is diluted at a ratio of between about 1:100 and about 1:5,000 concentrate to water. More particularly, the concentrate is diluted at a ratio of between about 1:250 and about 1:2,000 concentrate to water.

In an aspect, a concentrated antimicrobial composition is diluted to use solution concentration of about 0.001% (wt/vol.) to about 10% (wt/vol.), or from about 0.001% (wt/vol.) to about 5% (wt/vol.), or from about 0.001% (wt/vol.) to about 2% (wt/vol.), or from about 0.01% (wt/vol.) to about 1% (wt/vol.). Without limiting the scope of invention, the numeric ranges are inclusive of the numbers defining the range and include each integer within the defined range.

Compositions of the invention can be formulated and sold for use as is, or as solvent or solid concentrates. If desired, such concentrates can be used full-strength as sanitizing rinse compositions. However, the concentrates typically will be diluted with a fluid (e.g., water) that subsequently forms the dilute phase or a use solution. Preferably, the concentrate forms a single phase before such dilution and remains so while stored in the container in which it will be sold. When combined with water or other desired diluting fluid at an appropriate dilution level and subjected to mild agitation (e.g., by stirring or pumping the composition), some compositions of the invention will form a pseudo-stable dispersion, and other compositions of the invention will form a clear or quasi-stable solution or dispersion. If a pseudo-stable composition is formed, then the composition preferably remains in the pseudo-stable state for a sufficiently long period so that the composition can be applied to a surface before the onset of phase separation. The pseudo-stable state need only last for a few seconds when suitably rapid application techniques such as spraying are employed, or when agitation during application is employed. The pseudo-stable state desirably lasts for at least one minute or more after mixing and while the composition is stored in a suitable vessel, and preferably lasts for five minutes or more after mixing. Often normal refilling or replenishment of the applicator (e.g., by dipping the applicator in the composition) will provide sufficient agitation to preserve the pseudo-stable state of the composition during application.

The various applications of use described herein provide the quaternary ammonium compound compositions to a surface and/or water source. Beneficially, the compositions of the invention are fast-acting. However, the present methods require a certain minimal contact time of the compositions with the surface or product in need of treatment for occurrence of sufficient antimicrobial effect. The contact time can vary with concentration of the use compositions, method of applying the use compositions, temperature of the use compositions, pH of the use compositions, amount of the surface or product to be treated, amount of soil or substrates on/in the surface or product to be treated, or the like. The contact or exposure time can be about 15 seconds, at least about 15 seconds, about 30 seconds or greater than 30 seconds. In some embodiments, the exposure time is about 1 to 5 minutes. In other embodiments, the exposure time is a few minutes to hours. In other embodiments, the exposure time is a few hours to days. The contact time will further vary based upon the use concentration of actives of compositions according to the invention.

### Kits for Applications of Use

According to various applications of the compositions according to the invention a kit may be provided for dosing a composition according to the invention. In a particular application, the inactivated compositions may be provided by employing a kit according to embodiments of the invention. A kit for dosing and/or providing an inactivating quaternary ammonium composition according to the invention may comprise, consist of and/or consist essentially of a quaternary ammonium compound and an anionic surfactant (and/or chelant and/or polymer). Alternatively, the kits may comprise, consist of and/or consist essentially of an anionic surfactant (and/or chelant and/or polymer) for dosing with a quaternary ammonium compound in an application of use. The kit may further comprise a measuring means and/or a dosing means.

In an aspect, a kit is employed for the dosing of a suitable amount of an anionic surfactant (and/or chelant and/or polymer) to inactivate a quaternary ammonium compound. In an aspect, it may be desirable to dose or provide a surface and/or antimicrobial-inactivating amount of the anionic surfactant (and/or chelant and/or polymer). In embodiments it is desirable to lower surface activity (higher surface tension) as compared to another combination of anionic surfactant (and/or chelant and/or polymer) and a quaternary ammonium compound, such that the low surface activity neutralizes or deactivates the antimicrobial efficacy of the quaternary ammonium compound.

According to some embodiments of employing a kit, a composition and/or system having a quaternary ammonium compound is dosed a molar ratio dependent amount of the anionic surfactant (and/or chelant and/or polymer). In an aspect, the compositions include approximately a mole to mole ratio of quaternary ammonium compound and anionic surfactant. In other aspects, the compositions include up to about a 10 to about a 1 molar ratio of quaternary ammonium compound and anionic surfactant. In other aspects, the compositions include up to about 1 to about a 10 molar ratio of quaternary ammonium compound and anionic surfactant, or any combination thereof. In another embodiment the antimicrobial compositions are provided with a molar ratio of anionic surfactant to quaternary ammonium of about 1 mole anionic surfactant to about 1 mole of quaternary ammonium compound. In another embodiment the antimicrobial composition is provided with a molar ratio of anionic surfactant to quaternary ammonium compound of about 1.5 mole anionic surfactant to about 1 mole of quaternary ammonium compound. In another embodiment the antimicrobial composition is provided with a molar ratio of anionic surfactant to quaternary ammonium compound of about 1 mole anionic surfactant to about 10 moles of quaternary ammonium compound. In another embodiment the antimicrobial composition is provided with a molar ratio of anionic surfactant to quaternary ammonium compound of about 2 moles anionic surfactant to about 1 mole of quaternary ammonium compound. In each embodiment, the kit provides the mole ratio to inactivate the quaternary ammonium compound.

The kit may further comprise additional elements. For example, a kit may also include instructions for use of the inactivated compositions. Instructions included in kits can be affixed to packaging material or can be included as a package insert. While the instructions are typically written or printed materials they are not limited to such. Any medium capable of storing such instructions and communicating them to an end user is contemplated by this disclosure. Such media include, but are not limited to, electronic storage media (e.g., magnetic discs, tapes, cartridges, chips), optical media (e.g., CD, DVD), and the like. As used herein, the term "instructions" can include the address of an internet site that provides the instructions. The various components of the kit optionally are provided in suitable containers as necessary, e.g., a bottle, jar or vial.

### EXAMPLES

Amongst the following examples, only example 2B is according the present invention. Commerical Product A is formulated to include the following raw materials.

The materials used in the following Examples are provided herein:
- N-alkyl dimethyl benzyl ammonium chloride
- N-alkyl dimethyl ethylbenzyl ammonium chloride
- Alkoxylated C7-C11 fatty acid
- C9-C11 fatty acid

### EXAMPLE 1

Comparative studies on the toxic effects induced by oral or intravascular administration of commonly used disinfectants and surfactants in rats are well known in the art. The results of a study performed by Xue et.al. J. App. Toxicol., 32: 480-487. Doi: 10.1002/jat.1662 are summarized in Table 4, wherein "i.a" represents an intraarterial route, "i.v." is an intravenous route, "p.o." is oral administration, L is lethal dose, S indicates survival, and n.d. indicates no data.

**TABLE 4**

| | | Dose (mg/kg) | | | | | |
|---|---|---|---|---|---|---|---|
| | | i.a. | | i.v. | | p.o. | |
| Chemical Description | Type | 15-20 | 100-150 | 15-20 | 100-150 | 250 | 1250 |
| Benzalkonium Chloride BZK | Cationic | L | nd | L | nd | S | L |
| Benathonium Chloride BZT | Cationic | L | nd | L | nd | S | L |
| Alkyldiaminoethylglycin e AEG | Amphoteric | S | L | S | L | S | L |
| Soidum dodecylbenzensulfonate LAS | Anionic | S | L | S | L | S | L |
| Polyoxyethylene cetylether | Non-ionic | S | S | S | S | S | S |
| Chlorhexidine gluconate | Cationic dissinfectant | L | nd | L | nd | S | S (poor ) |
| | | 5 hours | | within 30 min | | | |

As shown in Table 3, cationic surfactants are more lethal than anionic or amphoteric surfactants. It was noted during the experiment that the benzalalkonium chloride (BAC) concentrations in the lungs and kidneys were several times higher compared to levels observed in the liver and tissue.

In addition, comparative studies such as that published by Radoslaw et al., Int. J. Occup. Med. Environ. Health 2013; 26(4):647-656 examiner the inhalation exposure risks of BAC at a rate of 35 mg per cubic meter. The study indicated that there were significant changes in lung biomarker levels. It was concluded that such BAC exposure may product pro-inflammatory changes due to oxidative stress. Damage to Clara cells and a reduced concentration in CC16 protein was also shown. BAC exposures induced massive influx of proteins from blood vessels and alveolar space, while simultaneously reducing CC16 protein concentrations which potentially lead to a damaged blood-air barrier. In sum, this inhalation study, BAC produced strong inflammatory response and damage to the blood-air barrier.

### EXAMPLE 2

A concentration study of quaternary ammonium formulations against a control under skim milk conditions is performed. As one of skill in the art would appreciate, quaternary ammonium formulations often have difficulty in being effective against milk soils in microbial tests. The formulas of the test are shown in Table 5, wherein the same quaternary ammonium compound was used in the control and test formulations A, B, and C. The results of the test are shown in Table 6.

**TABLE 5**

| **Formula** | **Chemical Product** |
|---|---|
| Control | Quaternary Ammonium Compounds (N-alkyl dimethyl benzyl ammonium chloride and N-alkyl dimethyl ethylbenzyl ammonium chloride) |
| A | Alkoxylated C7-C11 fatty acid and quaternary ammonium compound |
| B | C9-C11 fatty acid and quaternary ammonium compound |
| C | Commerical Product A; Urea, N-alkyl dimethyl benzyl ammonium chloride, N-alkyl dimethyl ethylbenzyl ammonium chloride, and amines |

**TABLE 6**

| **Formula** | **ppm Total Product** | **ppm Quat** | **pH** | **Vc 10e 0** | **Vc 10e-1** | **Vc 10e-2** | **Nts (#CFU on test surface)** | **Nd** | **Log Red (Nc-Nd)** |
|---|---|---|---|---|---|---|---|---|---|
| Control | 675 | 270 | 7.8 | 330 | 330 | 708 | 5 | 5.85 | 0.01 |
| A | 1316 | 270 | 4.1 | 330 | 330 | 44 | 16 | 5.65 | 0.22 |
| B | 1316 | 270 | 4.1 | 330 | 330 | 516 | 11 | 5.71 | 0.15 |
| C | 1316 | 500 | 7.8 | 330 | 330 | 183 | 46 | 5.26 | 0.6 |

As shown in Table 5, no effective log reduction was achieved at the test conditions. It is likely this is due to both pH and low concentration of quaternary ammonium compound.

### EXAMPLE 3

A concentration study of quaternary ammonium formulations against a control under skim milk conditions is performed at varying pH and concentrations of quaternary ammonium compounds according to the methods and procedures set forth in Example 2. As one of skill in the art would appreciate, quaternary ammonium formulations often have difficulty in being effective against milk soils in microbial tests. The results of the test are shown in Table 7.

**TABLE 7**

| **Formula** | **ppm Quaternary Ammoniu m Compound** | **pH** | **Vc 10e 0** | **Vc 10e-1** | **Vc 10e-2** | **Nts (#CFU on test surface)** | **Nd** | **Log Red (Nc-Nd)** |
|---|---|---|---|---|---|---|---|---|
| C | 2000 | 7.3 | 330 | 330 | 235 | 53 | 5.37 | 0.63 |
| C | 3000 | 7.2 | 330 | 330 | 238 | 69 | 5.38 | 0.63 |
| C | 4000 | 7.2 | 330 | 330 | 160 | 103 | 5.2 | 0.8 |
| B | 550 | 3.7 | 330 | 330 | 270 | 78 | 5.43 | 0.57 |
| B | 700 | 3.6 | 330 | 330 | 68 | 51 | 4.83 | 1.17 |
| B | 850 | 3.5 | 330 | 330 | 140 | 16 | 5.15 | 0.86 |
| B | 1000 | 3.4 | 330 | 330 | 109 | 2 | 5.04 | 0.97 |
| B | 1150 | 3.4 | 330 | 330 | 168 | 0 | 5.23 | 0.75 |
| B | 1300 | 3.3 | 330 | 330 | 17 | 0 | 4.23 | 1.77 |
| B | 1450 | 3.3 | 330 | 330 | 199 | 19 | 5.3 | 0.71 |
| B | 1600 | 3.2 | 330 | 330 | 286 | 18 | 5.46 | 0.55 |
| B | 1750 | 3.2 | 330 | 330 | 104 | 3 | 5.02 | 0.99 |
| B | 1900 | 3.2 | 330 | 330 | 262 | 3 | 5.42 | 0.59 |
| B | 2000 | 3.2 | 330 | 330 | 82 | 1 | 4.91 | 1.09 |

Despite the concentration gradient at an acidic pH, there was no effective log reduction.

### EXAMPLE 4

A concentration study of a commercially available quaternary ammonium formulation versus the acid experimental quaternary product of the present invention against skim milk soil conditions is performed at varying pH and concentrations of quaternary ammonium compounds according to the methods and procedures set forth in Example 2. Results are shown in Table 8.

**TABLE 8**

| Test vs. *Pseudomonas aeruginosa* ATCC 15442 with skim milk soil | | | | | |
|---|---|---|---|---|---|
| **5 min @ 22C with clean (8.5g/L) skim milk soil** | **Quat Cone ppm** | **pH** | | **Log Red (NC-Nd)** | **Log Red ≥ 4.00?** |
| **Formula C** | 500 | 7.8 | | 0.6 | No |
| | **1000** | **7.6** | | **0.07** | **No** |
| | 2000 | 7.3 | | 0.63 | No |
| | 3000 | 7.2 | | 0.63 | No |
| | 4000 | 7.2 | | 0.80 | No |
| **Formula B** | 270 | 4.1 | | 0.15 | No |
| | 550 | 3.7 | | 0.57 | No |
| | **1000** | **3.5** | | **0.97** | **No** |
| | **1000** | **2.7** | | **3.58** | **No** |
| | 1450 | 3.3 | | 0.71 | No |
| | 1750 | 3.2 | | 0.99 | No |
| | 2000 | 3.2 | | 1.09 | No |
| | 3000 | 3 | | 3.93 | No |
| | 4000 | 2.9 | | 4.00 | Yes |
| | 5000 | 2.8 | | *4.71* | Yes |
| | 7500 | 2.7 | | *4.71* | Yes |
| | 10000 | 2.6 | | *4.71* | Yes |

In the presence of a skim milk soil, the microbial efficacy of quaternary ammonium compounds was significantly reduced, however a much higher concentration of quaternary ammonium compound at acidic pH was needed to obtain 4 log efficacy. This is demonstrated by the duplicate tests performed at 1000 ppm of the Acidic Experiment Quat Product at 3.5 and 2.7 pH. As demonstrated, a more acidic pH increased the log reduction from 0.97 to 3.58, respectively. Additionally, the comparison of Formula C (currently available commercial product) with Formula B of the present invention indicates an increased log reduction. This comparison illustrate the unexpected discovery of the importance of pH of quaternary ammonium formulations in order to overcome antagonistic quaternary ammonium compound interactions with proteins.

### EXAMPLE 5

The effect of pH on solubility of quaternary ammonium compounds and milk soil solutions is determined by mixing equal parts of quaternary ammonium compounds and 8.5. g/L of a milk solution according to the methods of Example 2. Solution behavior is determined by observation. Test conditions are further summarized in Table 9.

**TABLE 9**

| **Formula** | **ppm Quaternary Ammonium Compound** | **pH** |
|---|---|---|
| C | 550 | 7.8 |
| C | 1000 | 7.8 |
| C | 1500 | 7.8 |
| C | 2000 | 7.8 |
| C | 3000 | 7.8 |
| B | 250 | 5.5 |
| B | 550 | 5.25 |
| B | 700 | 4.5 |
| B | 1000 | 4.0 |
| B | 1500 | 3.7 |

This visual observation of the effect of pH on solubility of quaternary ammonium compounds and milk soil solutions demonstrated the higher concentration of quaternary ammonium compound was more effective at removing the skim milk soil, as indicated by a less cloudy appearance. Similarly, the higher concentration and lower pH formulations were more effective against the skim milk soil, as indicated by a less cloudy appearance. From the solubility results, pH plays a significant role in the solubility of quaternary ammonium compounds in the presense of protein.

### EXAMPLE 6

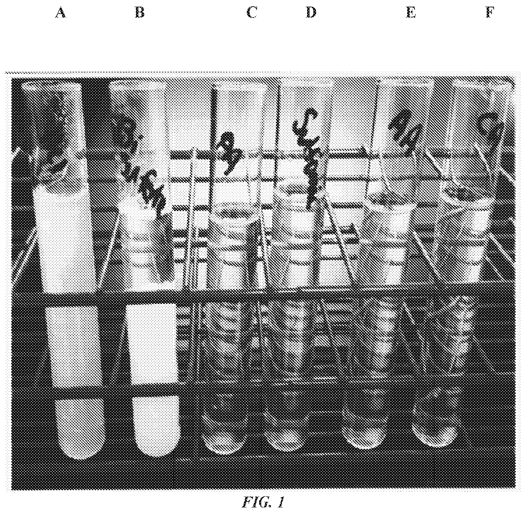

The effect of milk and acid solubility is investigated by mixing 1% acid to 8.5% skim milk soil solution. Test conditions are further summarized in Table 10. For purposes of this Example, no anionic surfactant was included for studies of solubility. Results are shown in Figure 1.

**TABLE 10**

| **Vial** | **Acid (1%)** | **pKa** |
|---|---|---|
| A | Hydrochloric Acid | 1.99 |
| B | Sodium Bisulfate | 1.99 |
| C | Phosphoric Acid | 2.15, 7.2, 12.319 |
| D | Sulfamic Acid | 1 |
| E | Acetic Acid | 4.76 |
| F | Citric Acid | 3.13, 4.76, 6.4 |

As shown in Figure 1, Vials C, D, E, and F provided more effective solubilization of the milk soils, as indicated by a less cloudy appearance.

### EXAMPLE 7

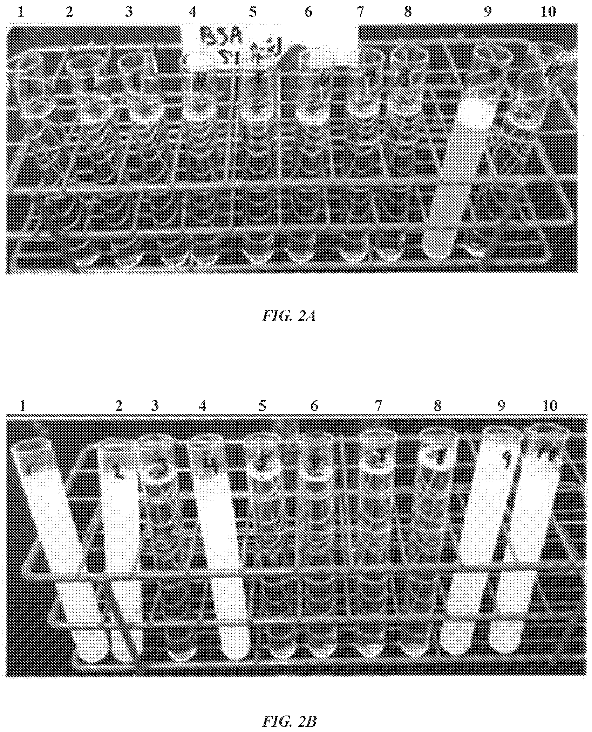

The effect of quaternary ammonium compound and acid solubility with different proteins was investigated. Test conditions are further summarized in Table 11. Results for 1% BSA protein soil are shown in Figure 2A and results for 1% skim milk protein soil are shown in Figure 2B.

| **ID No.** | **3 % Acid (0.5 % Quaternary Ammonium Compound)** |
|---|---|
| 1 | Sulfuric Acid |
| 2 | Hydrochloric Acid |
| 3 | Sulfamic Acid |
| 4 | Sodium Bisulfate |
| 5 | Phosphoric Acid |
| 6 | Citric Acid |
| 7 | Succinic Acid |
| 8 | Acetic Acid |
| 9 | Quaternary Ammonium Compound at Neutral pH |
| 10 | Control |

As demonstrated in Figure 2A and 2B, the results of this study suggest that the soil is more compatible to the formulations of the present invention comprising the quaternary ammonium compounds.

## Claims

1. An antimicrobial composition, comprising:
a quaternary ammonium compound having the formula: 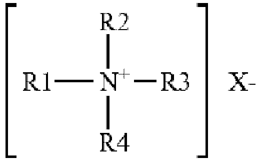
wherein groups R1, R2, R3, and R4 are the same or different, substituted or unsubstituted, saturated or unsaturated, branched or unbranched, cyclic or acyclic, may contain ether, ester, or amide linkages and are alkyl groups each having less than a C20 chain length, and X- is an anionic counterion;
an acid component, wherein the acid component is a fatty acid or a fatty acid surfactant ; wherein the composition is either a ready-to-use-solution or a watersoluble concentrate and has a pH between 0 to 6.

2. The antimicrobial composition of claim 1, wherein the concentrate is a solid or liquid concentrate.

3. The antimicrobial composition of claim 1, wherein the quaternary ammonium compound includes monoalkyltrimethyl ammonium salts, monoalkyldimethylbenzyl ammonium salts, dialkyldimethyl ammonium salts, heteroaromatic ammonium salts, polysubstituted quaternary ammonium salts, bis-quaternary ammonium salts, polymeric quaternary ammonium salts and combinations thereof.

4. The antimicrobial composition of any one of claims 1 - 3, wherein the quaternary ammonium compound is present in an amount from 1 wt.-% to 50 wt.-%.

5. The antimicrobial composition of any one of claims 1-4, wherein the fatty acid component is selected from hexanoic acid, heptanoic acid, octanoic acid, nonanoic acid, isononanoic acid, decanoic acid, lauric acid, palmitic acid, stearic acid, oleic acid, caproic acid, caprylic acid, capric acid and mixtures thereof.

6. The antimicrobial composition of any one of claims 1-5, wherein the acid component is present is an amount from 0.1 wt.-% to 30 wt.-%.

7. The antimicrobial composition of any one of claims 1-4, and 6, wherein the fatty acid component is selected from myristic acid, arachidic acid, behenic acid, lignoceric acid, cerotic acid, myristoleic acid, palmitoleic acid, sapienic acid, elaidic acid, vaccenic acid, linoleic acid, linoelaidic acid, a-linolenic acid, arachidonic acid, eicosapentaenoic acid, erucic acid, decosahexaenoic acid, gadoleic acid, erucic acid, margaric acid, behenic acid, ricinoleic acid, lignoceric acid, licanic acid, eleostearic acid and mixtures thereof.

8. The antimicrobial composition of any one of claims 1-7, further comprising at least one additional functional ingredient selected from the group consisting of additional surfactants, thickeners and/or viscosity modifiers, solvents, solubility modifiers, humectants, metal protecting agents, stabilising agents, corrosion inhibitors, sequestrants and/or chelating agents, solidifying agents, sheeting agents, pH-modifying components, fragrances and/or dyes, hydrotropes or couplers, buffers and combinations thereof.

9. A non-therapeutic method of killing microbes, comprising:
applying to an article, a surface, or stream of water or a gas an antimicrobial composition of any one of claims 1-8, wherein the composition provides at least 4 log kill on treated surfaces while providing a reduced inhalation hazard.

10. The method of claim 9 wherein the pH of the composition is between 0 to 6.

11. The method of any one of claims 9 - 10, wherein the quaternary ammonium compound is present in an amount from 1 wt.-% to 50 wt.-%; and wherein the acid component is present in an amount from 0.1 wt.-% to 30 wt.-%.

12. An antimicrobial composition of any one of claims 1-8 for reducing the population of a microorganism on skin.

## Patentansprüche

1. Antimikrobielle Zusammensetzung, umfassend:
eine quartäre Ammoniumverbindung, die die Formel aufweist: 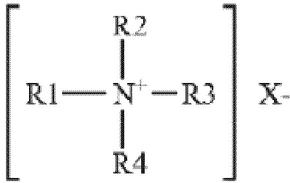
wobei die Gruppen R1, R2, R3 und R4 gleich oder verschieden, substituiert oder unsubstituiert, gesättigt oder ungesättigt, verzweigt oder unverzweigt, zyklisch oder azyklisch sind, Ether-, Ester- oder Amidbindungen enthalten können und Alkylgruppen sind, die jeweils einer Kettenläng von weniger als C20 aufweisen, und X- ein anionisches Gegenion ist;
eine Säurekomponente, wobei die Säurekomponente eine Fettsäure oder ein Fettsäuretensid ist; wobei die Zusammensetzung entweder eine gebrauchsfertige Lösung oder ein wasserlösliches Konzentrat ist und einen pH-Wert zwischen 0 und 6 aufweist.

2. Antimikrobielle Zusammensetzung nach Anspruch 1, wobei das Konzentrat ein festes oder flüssiges Konzentrat ist.

3. Antimikrobielle Zusammensetzung nach Anspruch 1, wobei die quaternäre Ammoniumverbindung Monoalkyltrimethylammoniumsalze, Monoalkyldimethylbenzylammoniumsalze, Dialkyldimethylammoniumsalze, heteroaromatische Ammoniumsalze, polysubstituierte quaternäre Ammoniumsalze, bis-quaternäre Ammoniumsalze, polymere quaternäre Ammoniumsalze und Kombinationen davon einschließt.

4. Antimikrobielle Zusammensetzung nach einem der Ansprüche 1 bis 3, wobei die quaternäre Ammoniumverbindung in einer Menge von 1 Gew.-% bis 50 Gew.-% vorhanden ist.

5. Antimikrobielle Zusammensetzung nach einem der Ansprüche 1 bis 4, wobei die Fettsäurekomponente aus Hexansäure, Heptansäure, Octansäure, Nonansäure, Isononansäure, Decansäure, Laurinsäure, Palmitinsäure, Stearinsäure, Ölsäure, Capronsäure, Caprylsäure, Caprinsäure und Mischungen davon ausgewählt ist.

6. Antimikrobielle Zusammensetzung nach einem der Ansprüche 1 bis 5, wobei die Säurekomponente in einer Menge von 0,1 Gew.-% bis 30 Gew.-% vorhanden ist.

7. Antimikrobielle Zusammensetzung nach einem der Ansprüche 1 bis 4 und 6, wobei die Fettsäurekomponente aus Myristinsäure, Arachinsäure, Behensäure, Lignocerinsäure, Cerotinsäure, Myristoleinsäure, Palmitoleinsäure, Sapiensäure, Elaidinsäure, Vaccensäure, Linolsäure, Linoelaidinsäure, a-Linolensäure, Arachidonsäure, Eicosapentaensäure, Erucasäure, Decosahexaensäure, Gadoleinsäure, Erucasäure, Margarinsäure, Behensäure, Ricinolsäure, Lignocerinsäure, Licansäure, Eleostearinsäure und Mischungen davon ausgewählt ist.

8. Antimikrobielle Zusammensetzung nach einem der Ansprüche 1 bis 7, ferner umfassend mindestens einen zusätzlichen funktionellen Inhaltsstoff, der aus der Gruppe ausgewählt ist, bestehend aus zusätzlichen Tensiden, Verdickungsmitteln und/oder Viskositätsmodifizierern, Lösungsmitteln, Löslichkeitsmodifizierern, Feuchthaltemitteln, Metallschutzmitteln, Stabilisierungsmitteln, Korrosionsinhibitoren, Komplexbildnern und/oder Chelatbildnern, Verfestigungsmitteln, Filmbildungsmitteln, pH-Wert modifizierenden Komponenten, Duftstoffen und/oder Farbstoffen, Hydrotropen oder Kupplern, Puffern und Kombinationen davon.

9. Nicht therapeutisches Verfahren zum Abtöten von Mikroben, umfassend:
Aufbringen einer antimikrobiellen Zusammensetzung nach einem der Ansprüche 1 bis 8 auf einen Gegenstand, eine Oberfläche oder einen Wasser- oder Gasstrom, wobei die Zusammensetzung auf behandelten Oberflächen eine Abtötung von mindestens 4 Log-Stufen bewirkt, während sie eine verringerte Inhalationsgefahr bereitstellt.

10. Verfahren nach Anspruch 9, wobei der pH-Wert der Zusammensetzung zwischen 0 bis 6 liegt.

11. Verfahren nach einem der Ansprüche 9 bis 10, wobei die quaternäre Ammoniumverbindung in einer Menge von 1 Gew.-% bis 50 Gew.-% vorhanden ist; und wobei die Säurekomponente in einer Menge von 0,1 Gew.-% bis 30 Gew.-% vorhanden ist.

12. Antimikrobielle Zusammensetzung nach einem der Ansprüche 1 bis 8 zum Reduzieren der Population eines Mikroorganismus auf der Haut.

## Revendications

1. Composition antimicrobienne, comprenant :
un composé d'ammonium quaternaire ayant la formule : 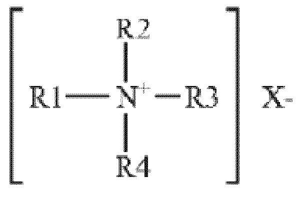
où les groupes R1, R2, R3 et R4 sont identiques ou différents, substitués ou non substitués, saturés ou insaturés, ramifiés ou non ramifiés, cycliques ou acycliques, peuvent contenir des liaisons éther, ester ou amide et sont des groupes alkyle ayant chacun une longueur de chaîne inférieure à C20, et X-représente un contre-ion anionique ;
un composant acide, dans laquelle le composant acide est un acide gras ou un tensioactif d'acide gras ; dans laquelle la composition est soit une solution prête à l'emploi, soit un concentré soluble dans l'eau, et a un pH est compris entre 0 à 6.

2. Composition antimicrobienne selon la revendication 1, dans laquelle le concentré est un concentré solide ou liquide.

3. Composition antimicrobienne selon la revendication 1, dans laquelle le composé d'ammonium quaternaire comporte des sels de monoalkyltriméthyl ammonium, des sels de monoalkyldiméthylbenzyl ammonium, des sels de dialkyldiméthyl ammonium, des sels d'ammonium hétéroaromatique, des sels d'ammonium quaternaire polysubstitué, des sels d'ammonium bis-quaternaire, des sels d'ammonium quaternaire polymérique et des combinaisons de ceux-ci.

4. Composition antimicrobienne selon l'une quelconque des revendications 1 à 3, dans laquelle le composé d'ammonium quaternaire est présent dans une proportion allant de 1 % en poids à 50 % en poids.

5. Composition antimicrobienne selon l'une quelconque des revendications 1 à 4, dans laquelle le composant acide gras est choisi parmi acide hexanoïque, acide heptanoïque, acide octanoïque, acide nonanoïque, acide isononanoïque, acide décanoïque, acide laurique, acide palmitique, acide stéarique, acide oléique, acide caproïque, acide caprylique, acide caprique et des mélanges de ceux-ci.

6. Composition antimicrobienne selon l'une quelconque des revendications 1 à 5, dans laquelle le composant acide est présent dans une proportion allant de 0,1 % en poids à 30 % en poids.

7. Composition antimicrobienne selon l'une quelconque des revendications 1 à 4 et 6, dans laquelle le composant acide gras est choisi parmi acide myristique, acide arachidique, acide béhénique, acide lignocérique, acide cérotique, acide myristoléique, acide palmitoléique, acide sapiénique, acide élaïdique, acide vaccénique, acide linoléique, acide linoélaïdique, acide a-linolénique, acide arachidonique, acide eicosapentaénoïque, acide érucique, acide décosahexaénoïque, acide gadoléique, acide érucique, acide margarique, acide béhénique, acide ricinoléique, acide lignocérique, acide licanique, acide éléostéarique et des mélanges de ceux-ci.

8. Composition selon l'une quelconque des revendications 1 à 7, comprenant en outre au moins un ingrédient fonctionnel supplémentaire choisi dans le groupe constitué de tensioactifs, épaississants et/ou modificateurs de viscosité, solvants, modificateurs de solubilité, agents d'humectation, agents protecteurs des métaux, agents stabilisants, inhibiteurs de corrosion, séquestrants et/ou chélateurs, agents solidifiants, agents d'écoulement, composants modifiant le pH, parfums et/ou colorants, hydrotropes ou coupleurs, tampons supplémentaires et combinaisons de ceux-ci.

9. Procédé non thérapeutique permettant de tuer les microbes, comprenant :
l'application sur un article, une surface ou un flux d'eau ou de gaz d'une composition antimicrobienne selon l'une quelconque des revendications 1 à 8, dans lequel la composition assure une réduction d'au moins 4 log sur les surfaces traitées tout en fournissant une réduction du risque d'inhalation.

10. Procédé selon la revendication 9 dans lequel le pH de la composition est compris entre 0 à 6.

11. Procédé selon l'une quelconque des revendications 9 à 10, dans lequel le composé d'ammonium quaternaire est présent dans une proportion allant de 1 % en poids à 50 % en poids ; et dans lequel le composant acide est présent dans une proportion allant de 0,1 % en poids à 30 % en poids.

12. Composition antimicrobienne selon l'une quelconque des revendications 1 à 8 pour la réduction de la population d'un micro-organisme sur la peau.
